# EUROPEAN PATENT APPLICATION

(11) **EP 2 437 111 A1**
(43) Date of publication of application: **04.04.2012**
(21) Application number: 10780197.9
(22) Date of filing: 27.04.2010
(51) Int. Cl.: G02F 1/1343, G02F 1/1333

(54) **LIQUID CRYSTAL PANEL, METHOD FOR MANUFACTURING SAME, AND LIQUID CRYSTAL DISPLAY DEVICE**

(30) Priority: 29.05.2009 JP 2009131558; 10.02.2010 JP 2010028174
(71) Applicant: Sharp Kabushiki Kaisha, Osaka-shi, Osaka 545-8522 (JP)
(72) Inventor: Murata, Mitsuhiro, Osaka 545-8522 (JP); Kozaki, Shuichi, Osaka 545-8522 (JP); Ishihara, Shoichi, Osaka 545-8522 (JP); Sakurai, Takehisa, Osaka 545-8522 (JP); Ohtake, Tadashi, Osaka 545-8522 (JP); Nakamura, Masako, Osaka 545-8522 (JP)
(74) Representative: Müller - Hoffmann & Partner
(86) International application number: PCT/JP2010/003007
(87) International publication number: WO 2010/137235

(57) **Abstract**

A liquid crystal panel (2) includes: a pair of substrates (10, 20) which face each other; a liquid crystal layer (30) sandwiched by the pair of substrates (10, 20); and an upper electrode (14) and a lower electrode (12) which are provided on one surface (10) of the pair of substrates (10, 20) and overlap each other via an insulating layer (13), the upper electrode (14) being constituted by comb electrodes (14A, 14B), an average electrical energy being not less than 0.44J/m³ in a part of the liquid crystal layer which part is 0.1 µm deep from a surface of the other one (20) of the pair of substrates (10, 20) and which part overlaps the comb electrodes (14A, 14B) when the liquid crystal layer (30) is viewed from a direction vertical to a substrate surface.

## Description

### Technical Field

The present invention relates to a liquid crystal panel, a method for manufacturing the liquid crystal panel, and a liquid crystal display device. More specifically, the present invention relates to (i) a liquid crystal panel, (ii) a method for manufacturing the liquid crystal panel, and (iii) a liquid crystal display device, in each of which transmission of light is controlled by applying a lateral electric field to a vertical-alignment type liquid crystal cell in which liquid crystal molecules are aligned in a direction vertical to a substrate when no voltage is applied.

### Background Art

In recent years, liquid crystal display devices, which have spread rapidly to take the place of cathode-ray tubes (CRTs), have been widely used in televisions, monitors, and mobile devices such as mobile phones, and the like thanks to their low-profile, lightweight features, energy-saving, etc.

A display mode of a liquid crystal display device is determined depending on how liquid crystal is aligned in a liquid crystal cell.

Conventionally, an MVA mode (Multi-domain Vertical Alignment) mode is known as a display mode of a liquid crystal display device. The MVA mode is a mode such that a vertical electric field is applied by providing a slit to each pixel electrode on an active matrix substrate and, further, providing a rib for controlling liquid crystal molecule alignment to a counter electrode on a counter substrate, thereby providing a plurality of alignment directions of liquid crystal molecules while controlling the alignment directions with the use of the rib and the slit.

The MVA mode liquid crystal display device achieves a wide viewing angle by having a plurality of divisional directions in each of which liquid crystal molecules are tilted at the time when a voltage is applied. Further, employing a vertical alignment mode, the MVA mode liquid crystal display device can obtain a higher contrast as compared with liquid crystal display devices of horizontal alignment modes such as IPS (In-Plain Switching) mode. However, the MVA mode liquid crystal display has disadvantages such that a production process is complex.

Another display mode is proposed in order to solve the process problem of the MVA mode. According to this display mode, a comb electrode is used in a vertical alignment type liquid crystal cell (vertical alignment cell) in which liquid crystal molecules are aligned in a direction vertical to a substrate when no voltage is applied, thereby applying an electric field parallel to the substrate (so-called lateral electric field) (see Patent Literature 1, for example).

In this display mode, while a high contrast characteristic due to vertical alignment is maintained, driving is carried out by using a lateral electric field so that an alignment direction of liquid crystal molecules is defined. In the display mode, a pixel configuration is simple because alignment control by a rib as in the MVA mode is not necessary. Further, the display mode has an excellent viewing angle characteristic.

### Citation List

Patent Literature 1
   Japanese Patent Application Publication, Tokukaihei, No. 10-186351 A (Publication Date: July 14, 1998)

### Summary of Invention

### Technical Problem

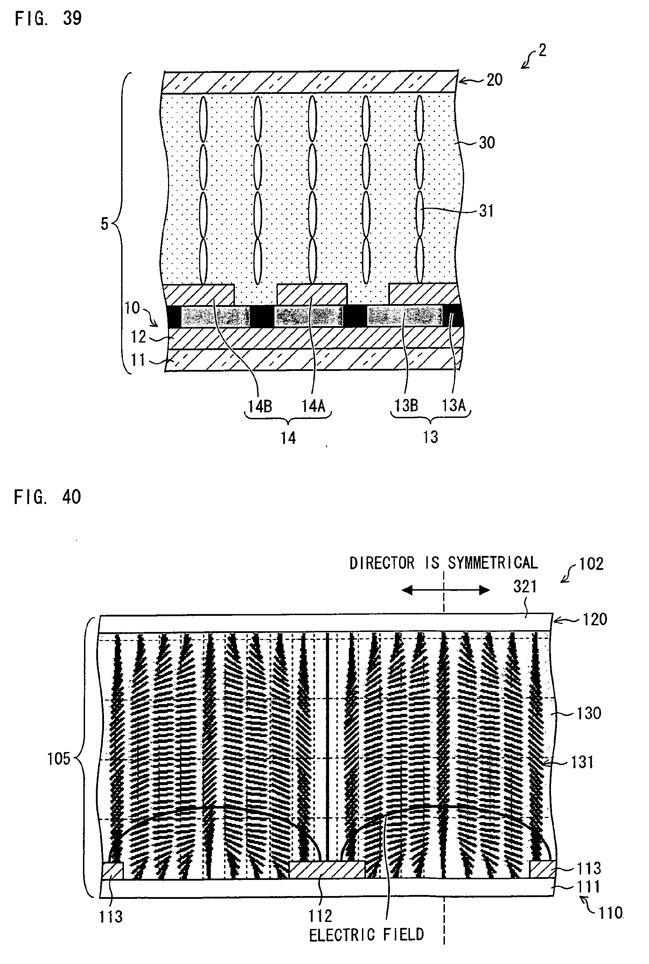

With reference to Fig. 40, the following deals with an exemplary configuration of a liquid crystal display panel using a display mode according to which a lateral electric field is applied to a vertical alignment type liquid crystal cell as described above.

Fig. 40 is a view schematically illustrating a director distribution of liquid crystal molecules in a vertical alignment type liquid crystal cell, which director distribution is achieved when the display mode according to which a lateral electric field is applied to the vertical alignment type liquid crystal cell is used.

As illustrated in Fig. 40, a liquid crystal panel 102 using the display mode is configured such that a pair of substrates 110 and 120 which sandwich a liquid crystal layer 130 and face each other are provided, and a pair of comb electrodes 112 and 113, which respectively serve as a pixel electrode and a common electrode, is provided on the substrate 110.

In the liquid crystal panel 102 configured as above, typically, the pair of comb electrodes 112 and 113 is provided on a glass substrate 111, and a vertical alignment film (not shown) is provided as an alignment film so as to cover the pair of comb electrodes 112 and 113.

In the liquid crystal panel 102 configured as above, a lateral electric field is applied across the comb electrodes 112 and 113 so that a director distribution of liquid crystal molecules 131 is symmetrical with respect to a central part of an electrode line formed by the comb electrodes and an arc-shaped (bend-shaped) liquid crystal alignment distribution is formed in the cell (see Fig. 40). As a result, the liquid crystal molecules 131 are vertically aligned when power is off, whereas when power is on, the liquid crystal molecules 131 are aligned so that the self-directors are offset-compensated with respect to the central part of the electrode line.

As such, the display mode can achieve a high-speed response due to bend alignment, a wide viewing angle due to offset compensation type alignment of the self-directors, and a high contrast due to vertical alignment.

However, the display mode has a problem that a driving voltage is high.

Further, there is a problem specific to the display mode. Specifically, since the liquid crystal molecules 131 do not operate above the comb electrodes 112 and 113, a dark line is formed, thereby resulting in that an aperture ratio and transmittance are undesirably low.

In order to increase transmittance, it is necessary to secure a large alignment space above the electrode line and to use a liquid crystal material having a large dielectric constant anisotropy Δε.

However, a liquid crystal material having a large dielectric constant anisotropy Δε has a relatively high viscosity. As such, use of such a liquid crystal material causes an increase in viscosity of the liquid crystal layer 130, thereby preventing high-speed response.

In order to increase transmittance, it is therefore necessary to make a phase difference as large as possible by voltage application.

However, according to the display mode, the liquid crystal molecules 131 do not rotate uniformly within a display plane, as described above. Moreover, a large number of dark lines formed in a display region serve as a kind of wall which restricts rotation of the liquid crystal molecules. As a result, a sufficient phase difference cannot be attained by application of a normal driving voltage.

On this account, according to the display mode, a reduction in voltage is difficult. Furthermore, according to the display mode, it is extremely difficult to achieve both of a reduction in voltage and high transmittance.

For the above reasons, in the display mode, no proposal for achieving a reduction in voltage has been made. Further, since according to the display mode, it is difficult to carry out driving with the use of a practical driving voltage, a liquid crystal panel and a liquid crystal display device using the display mode has not been put into a practical use yet although the display mode has the above-mentioned advantage.

The present invention was attained in view of the above problems, and an object of the present invention is to reduce a driving voltage in a liquid crystal panel and a liquid crystal display device which employ a display mode in which a lateral electric field is applied to a vertical alignment cell as described above.

Another object of the present invention is to achieve a reduction in driving voltage and improvement in transmittance in a liquid crystal panel and a liquid crystal display device which employ the display mode.

Another object of the present invention is to provide a method for manufacturing a liquid crystal panel in which a driving voltage is low and a liquid crystal panel in which a driving voltage is low and transmittance is high, each of which employs the display mode in which a lateral electric field is applied to a vertical alignment cell.

### Solution to Problem

Under the circumstances, the inventors of the present invention found, as a result of simulation and experiments, a special condition in which a reduction in voltage can be achieved, and a special condition in which a reduction in voltage can be achieved while maintaining high transmittance, in a liquid crystal panel and a liquid crystal display device which employ the display mode. As a result, the inventors of the present invention successfully achieved a reduction in voltage in a liquid crystal panel and a liquid crystal display device which employ the display mode.

That is, in order to attain the above objects, a liquid crystal panel of the present invention includes: a pair of substrates which face each other; a liquid crystal layer sandwiched by the pair of substrates; and an upper electrode and a lower electrode which are provided on one of the pair of substrates and overlap each other via an insulating layer, the upper electrode being constituted by comb electrodes, an average electrical energy being not less than 0.44J/m³ in a part of the liquid crystal layer which part is 0.1 µm deep from a surface of the other one of the pair of substrates and which part overlaps the comb electrodes when the liquid crystal layer is viewed from a direction vertical to a substrate surface.

A liquid crystal display device of the present invention includes the liquid crystal panel.

In order to attain the above objects, a method of the present invention for manufacturing a liquid crystal panel, includes: forming an upper electrode and a lower electrode on one of a pair of substrates which sandwich a liquid crystal layer and face each other, the upper electrode being constituted by comb electrodes and overlapping the lower electrode via an insulating layer; and determining a combination of an electrode spacing of the comb electrodes, a thickness of the insulating layer, a relative permittivity of the insulating layer, and a driving mode so that an average electrical energy becomes not less than 0.44J/m³ in a part of the liquid crystal layer which part is 0.1 µm deep from a surface of the other one of the pair of substrates and which part overlaps the comb electrodes when the liquid crystal layer is viewed from a direction vertical to a substrate surface.

### Advantageous Effects of Invention

A liquid crystal panel and a liquid crystal display device of the present invention can achieve, by carrying out driving with the use of a so-called lateral electric field parallel to a substrate surface, a high-speed response, a wide viewing angle characteristic, and a high contrast characteristic with a simple pixel configuration while maintaining high contrast due to vertical alignment.

Further, according to the liquid crystal panel and the liquid crystal display device, since the upper electrode and the lower electrode are provided so as to overlap each other via the insulating layer, liquid crystal molecules located above the comb electrodes can be driven. This allows a higher aperture ratio as compared to a liquid crystal panel which does not include the lower electrode.

The most noteworthy is that a rising voltage of liquid crystal molecules could be reduced by setting the electrical energy to 0.44J/m³, thereby achieving a reduction in driving voltage in a display mode according to which a lateral electric field is applied to a vertical alignment cell, which reduction in driving voltage has been conventionally considered difficult. Moreover, a reduction in driving voltage and improvement in transmittance could be achieved at the same time.

As such, according to the present invention, it is possible to provide (i) a liquid crystal panel, (ii) a method for manufacturing the liquid crystal panel, and (iii) a liquid crystal display device, each of which can achieve a high-speed response, a wide viewing angle characteristic, and a high contrast characteristic, can carry out driving with the use of a practical driving voltage, and can achieve high transmittance.

### Brief Description of Drawings

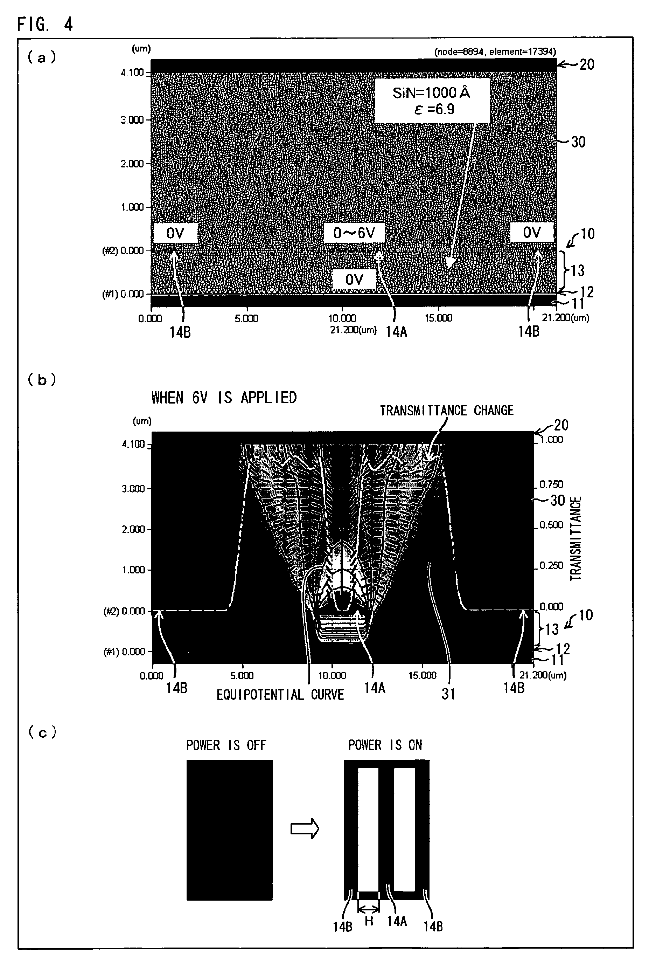

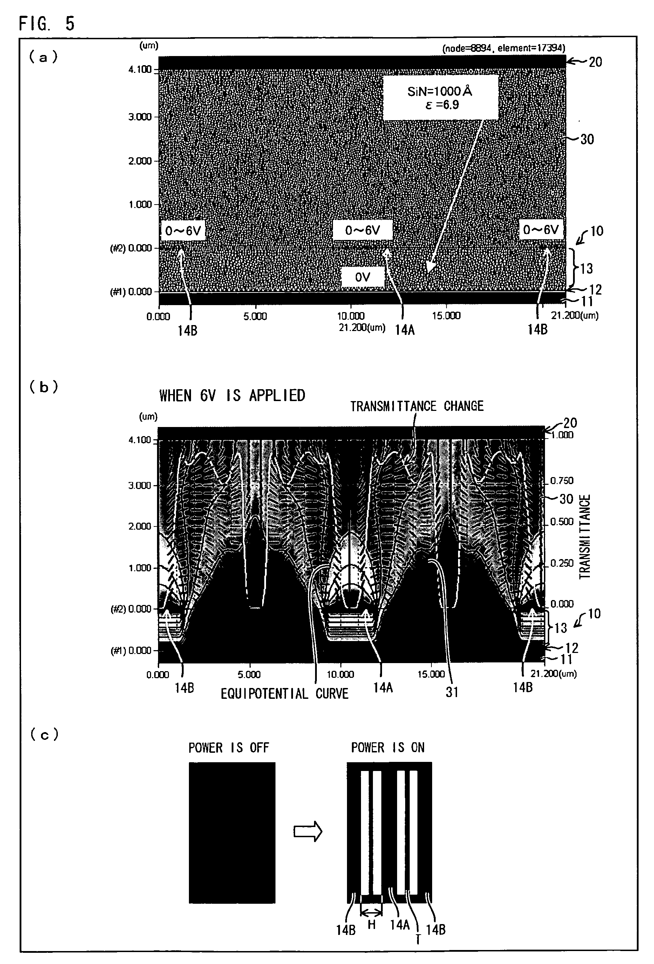

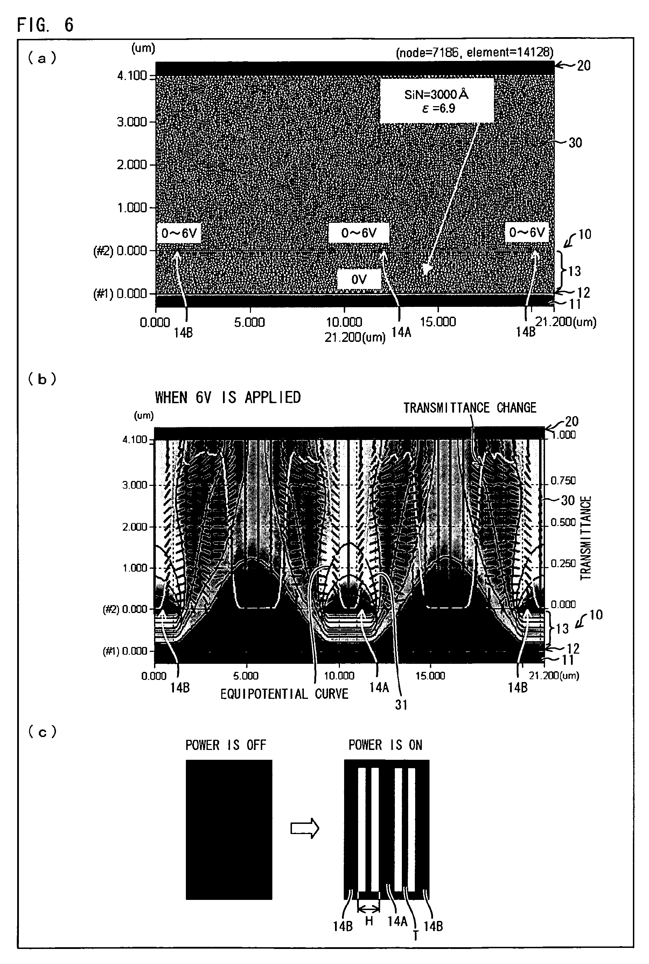

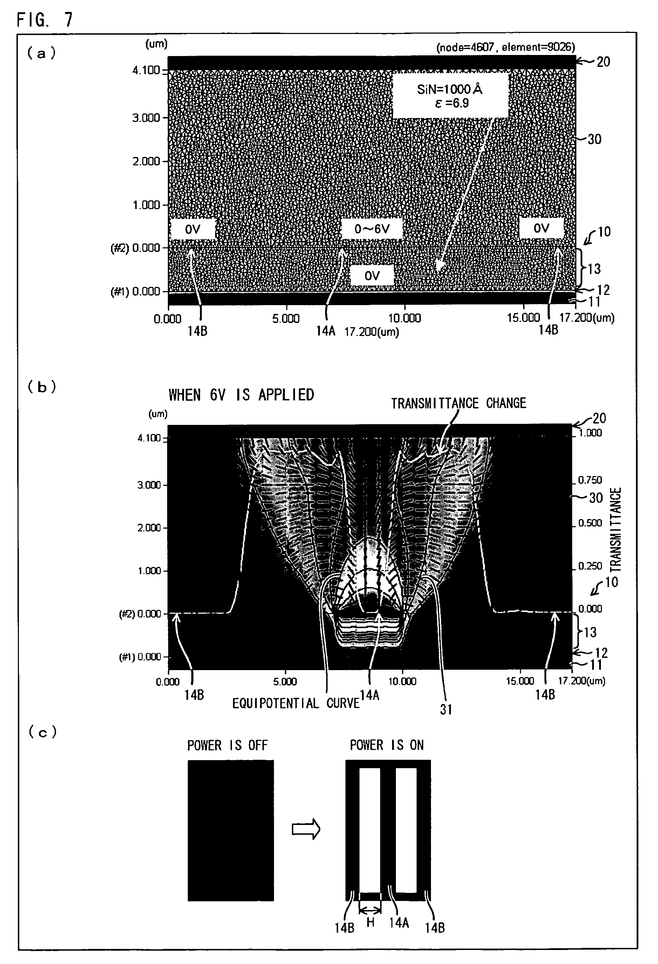

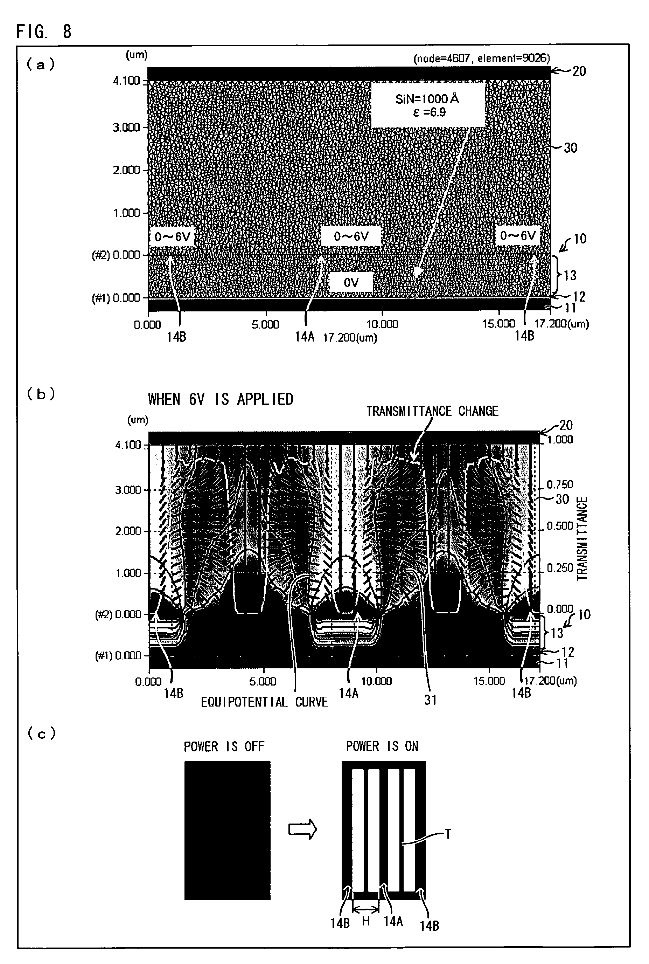

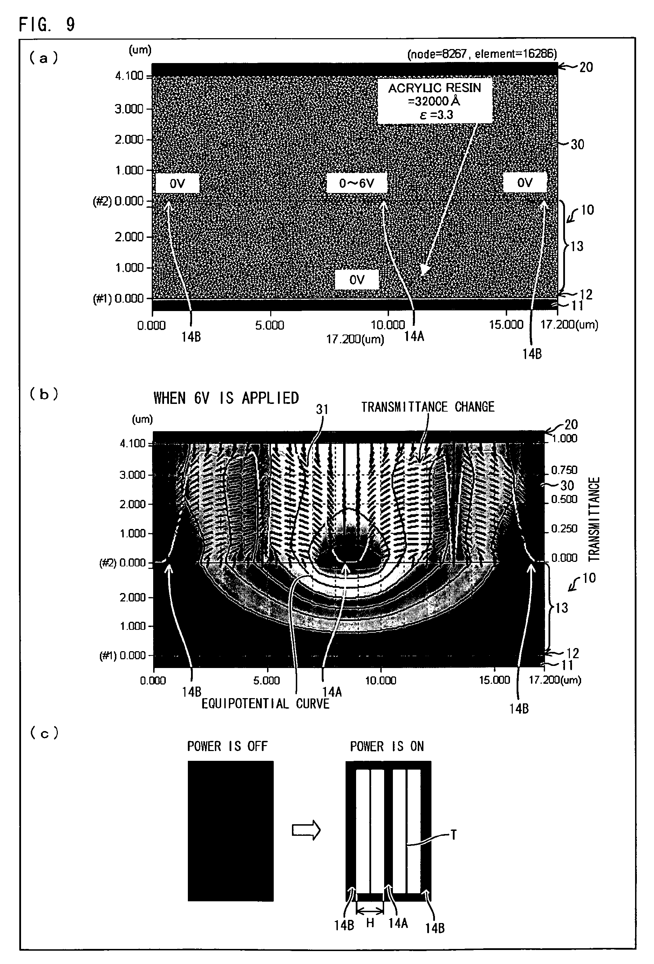

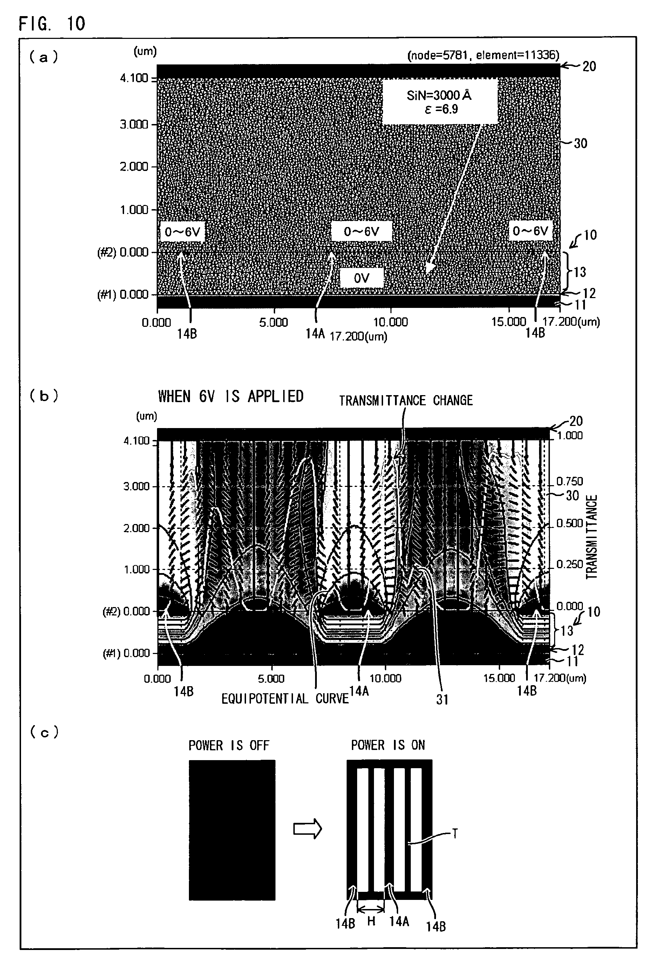

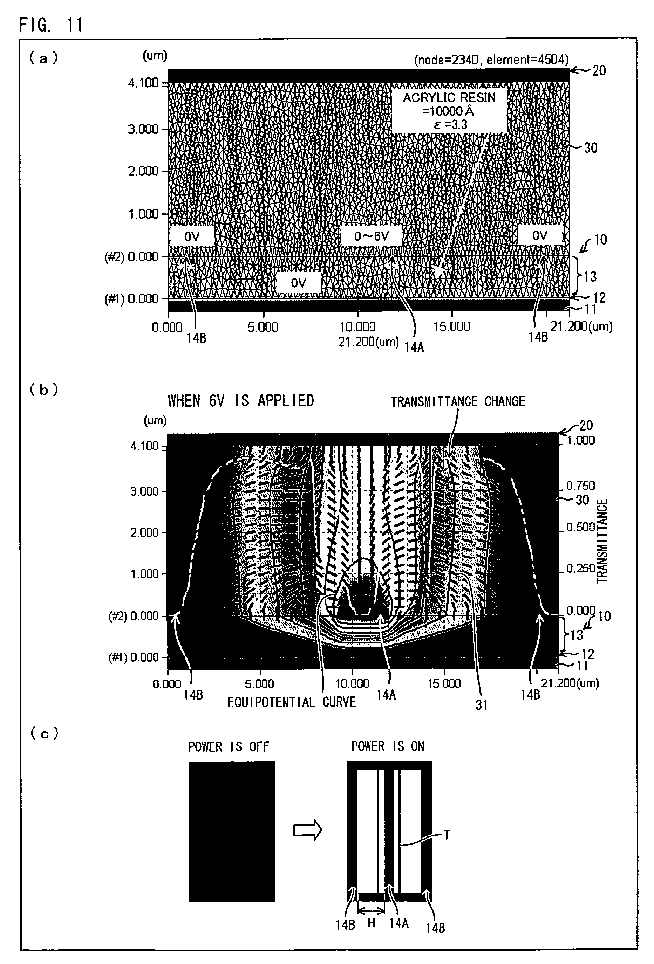

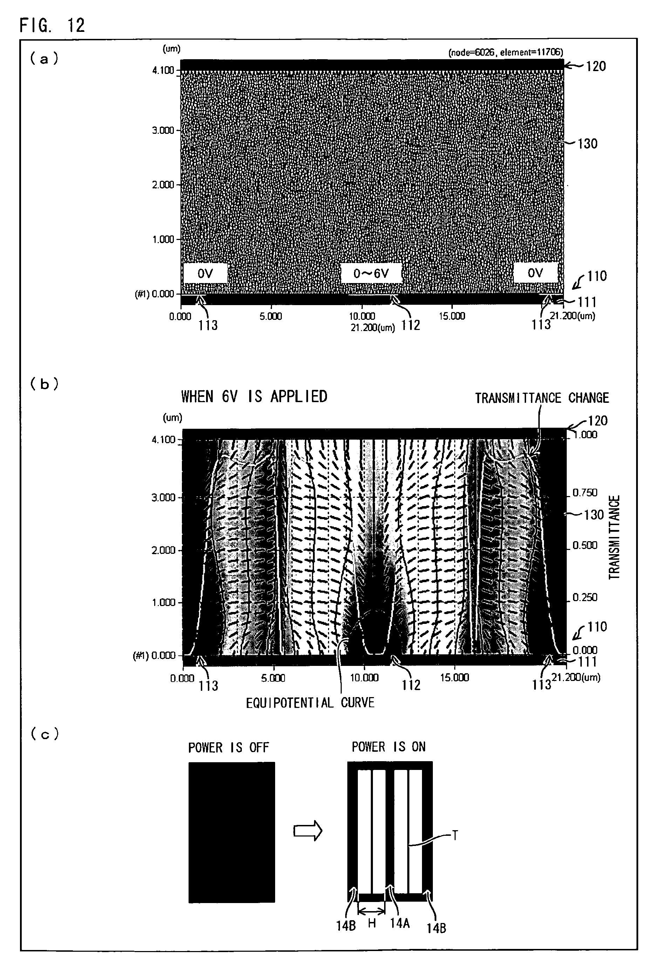

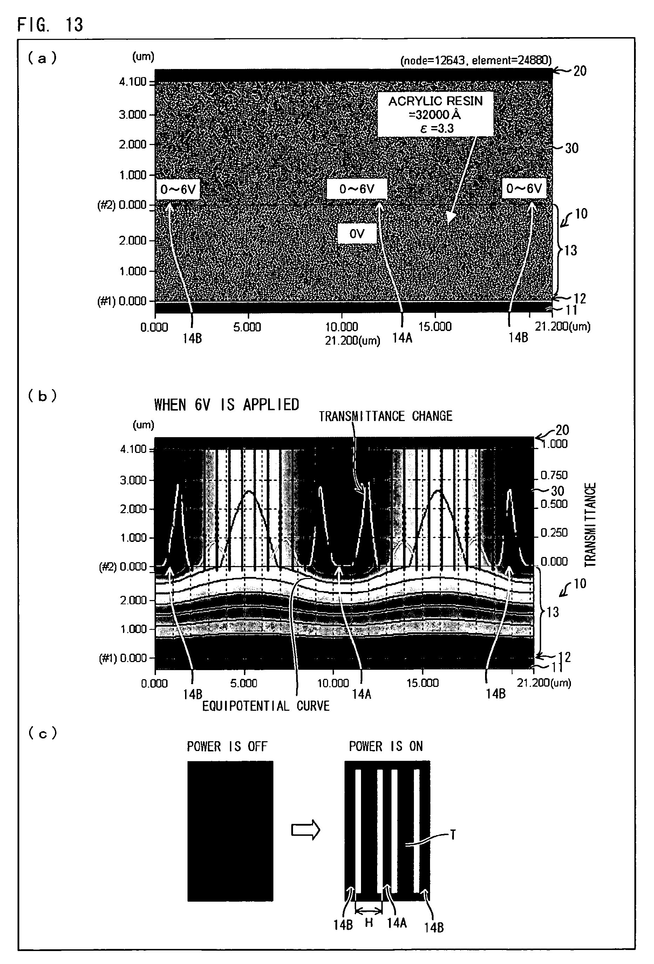

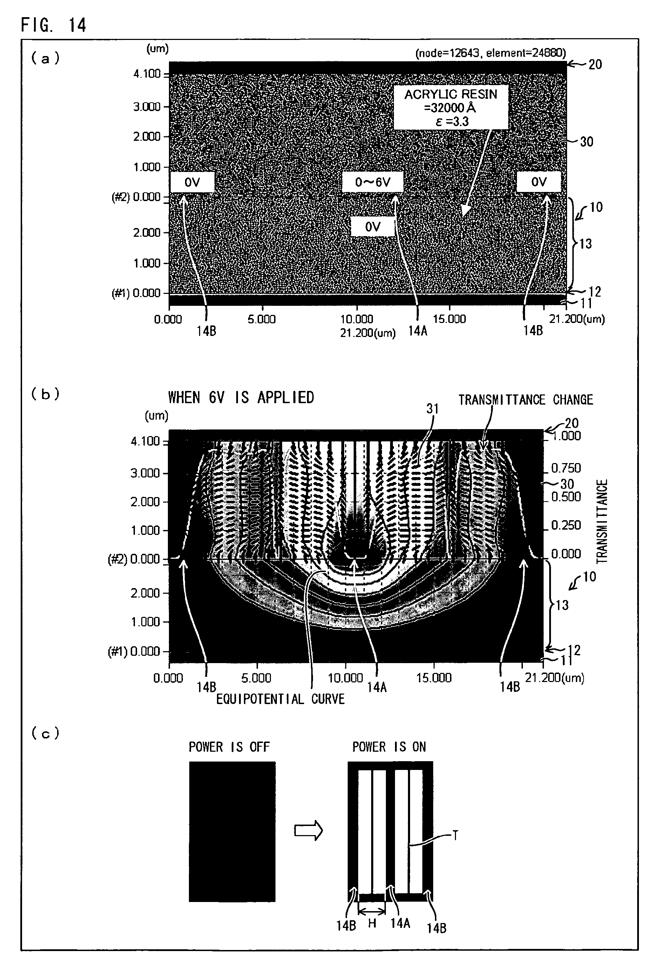

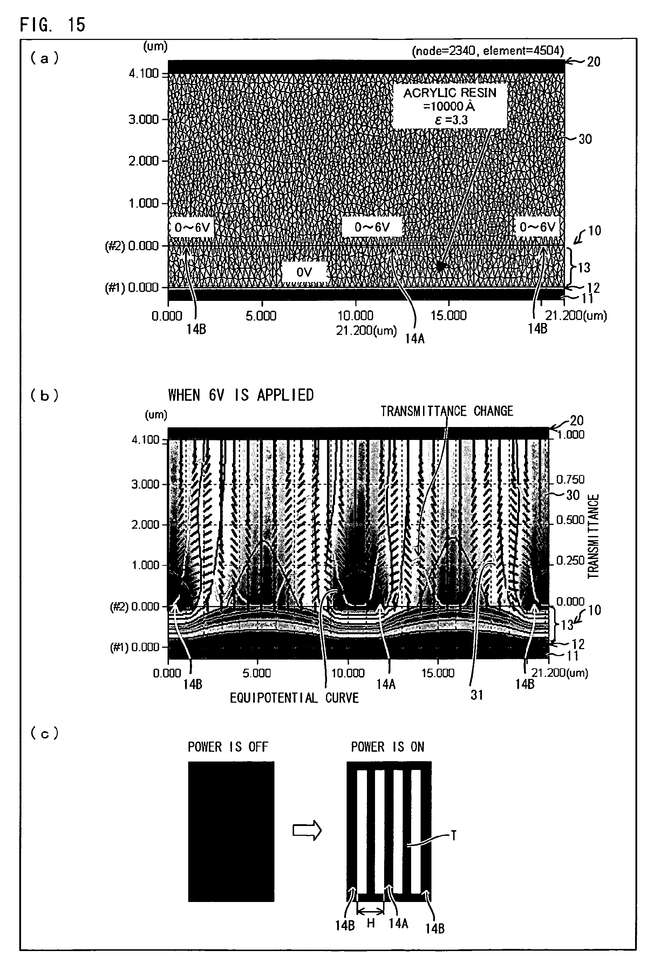

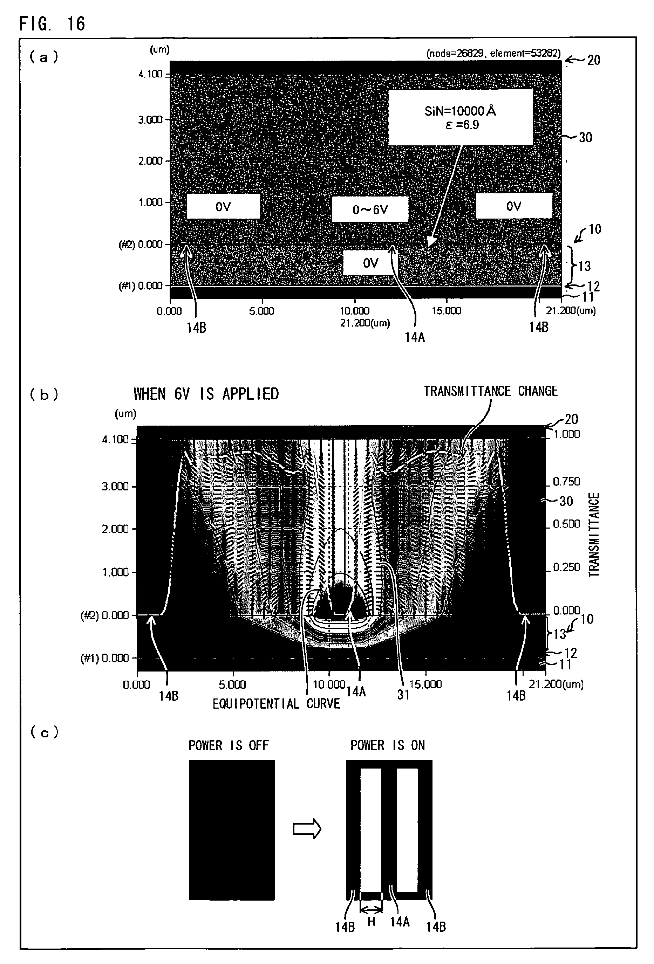

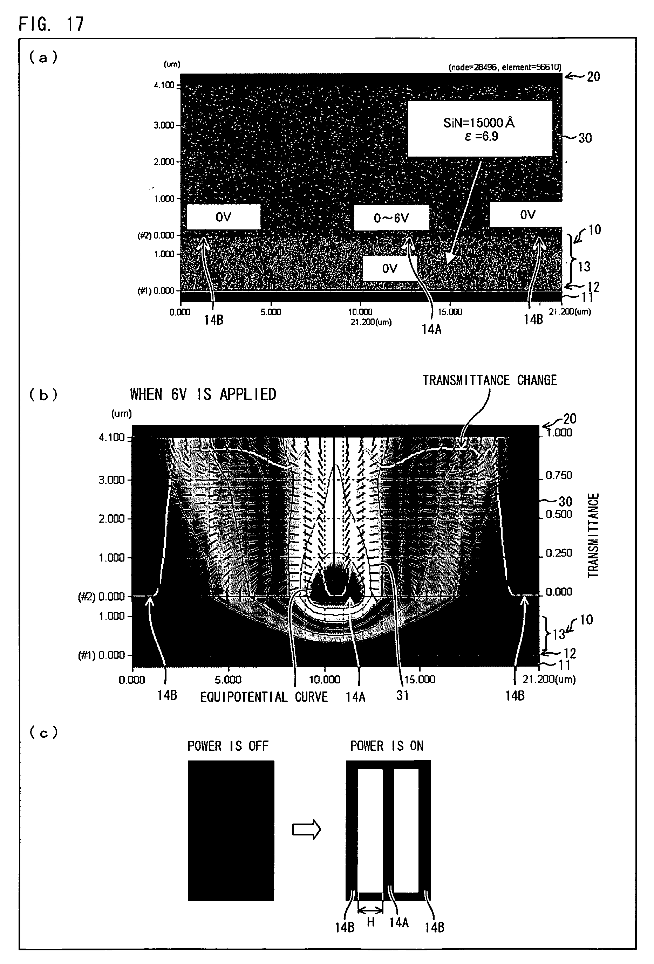

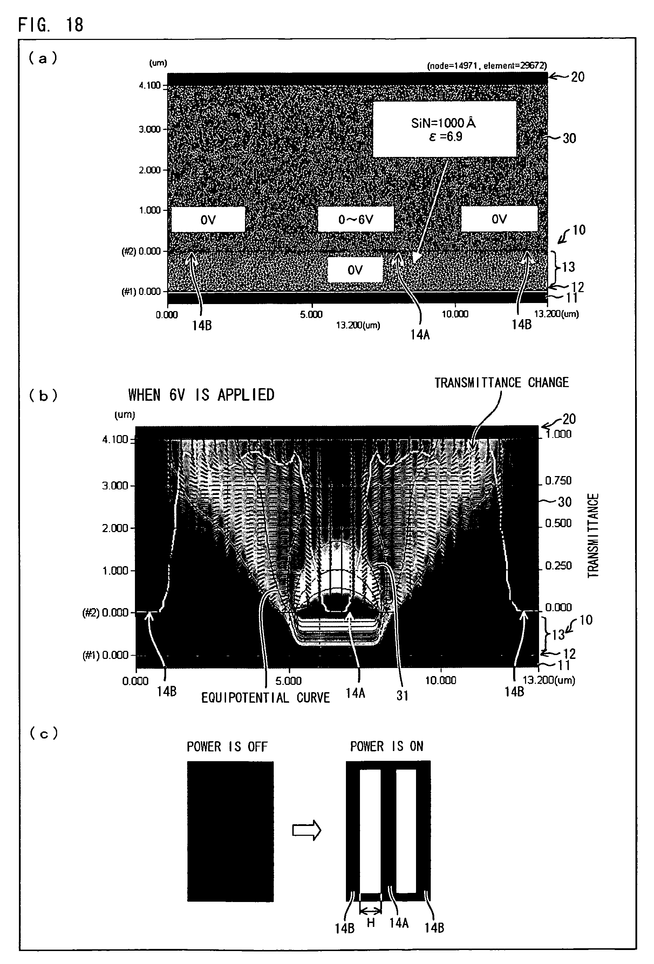

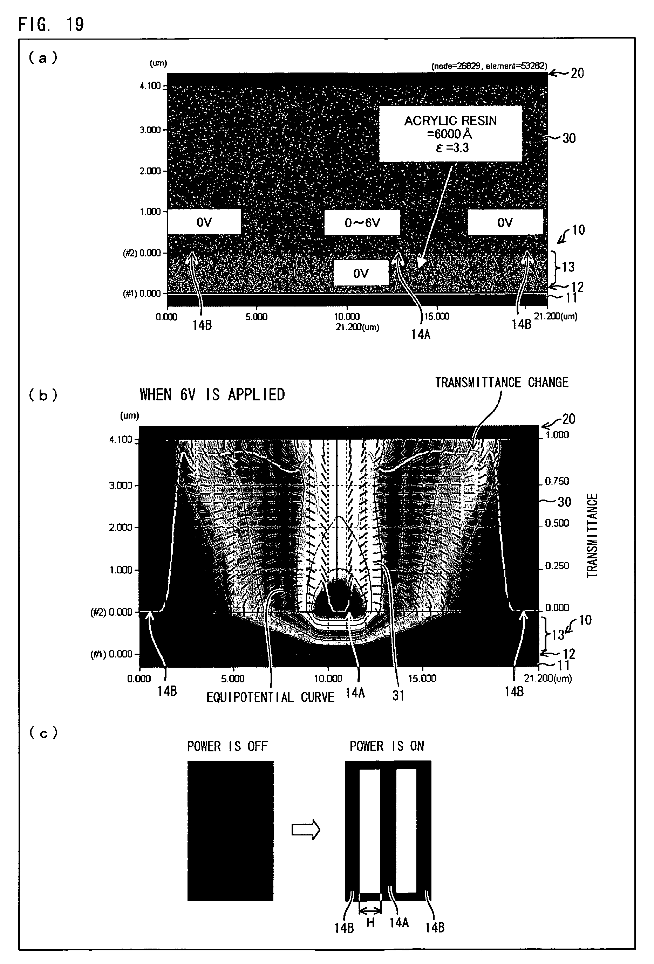

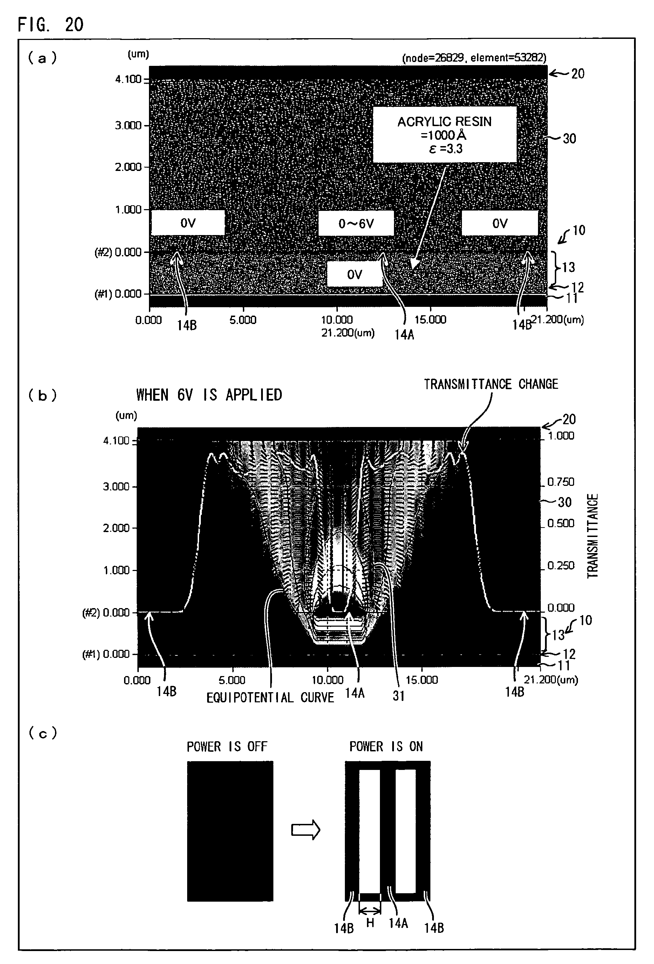

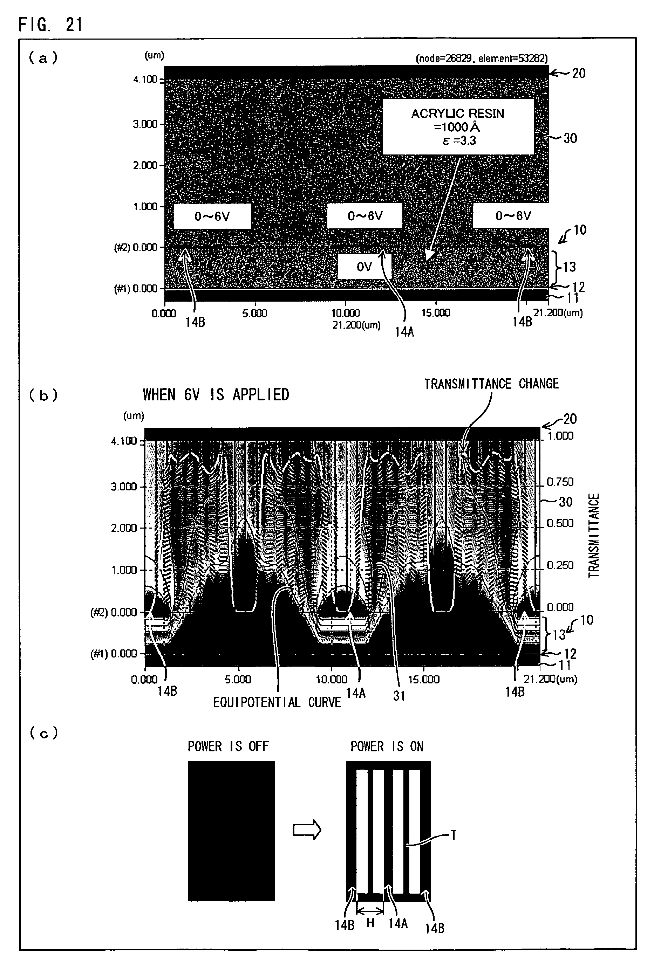

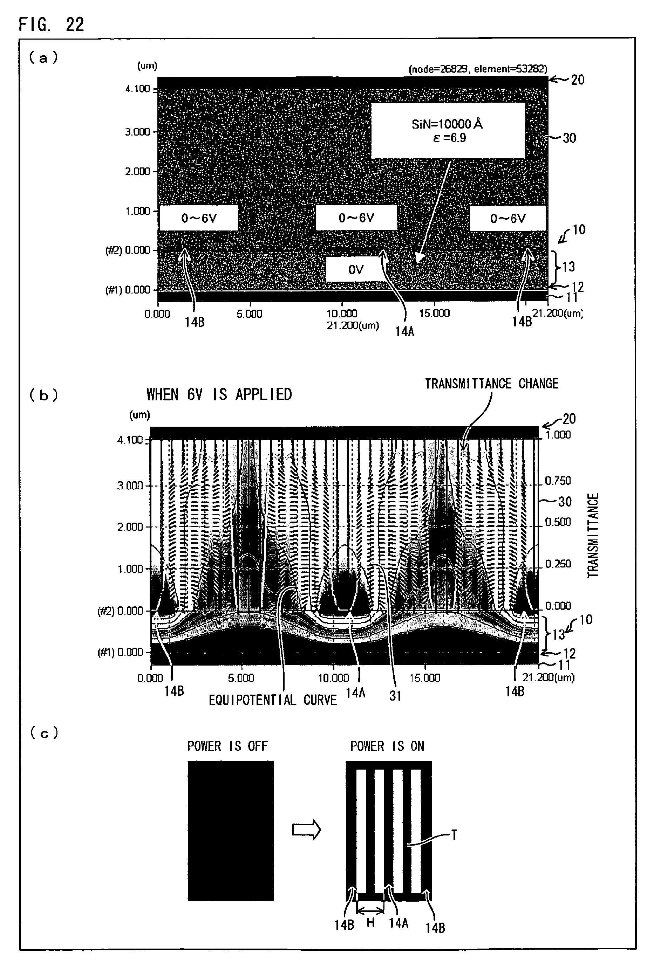

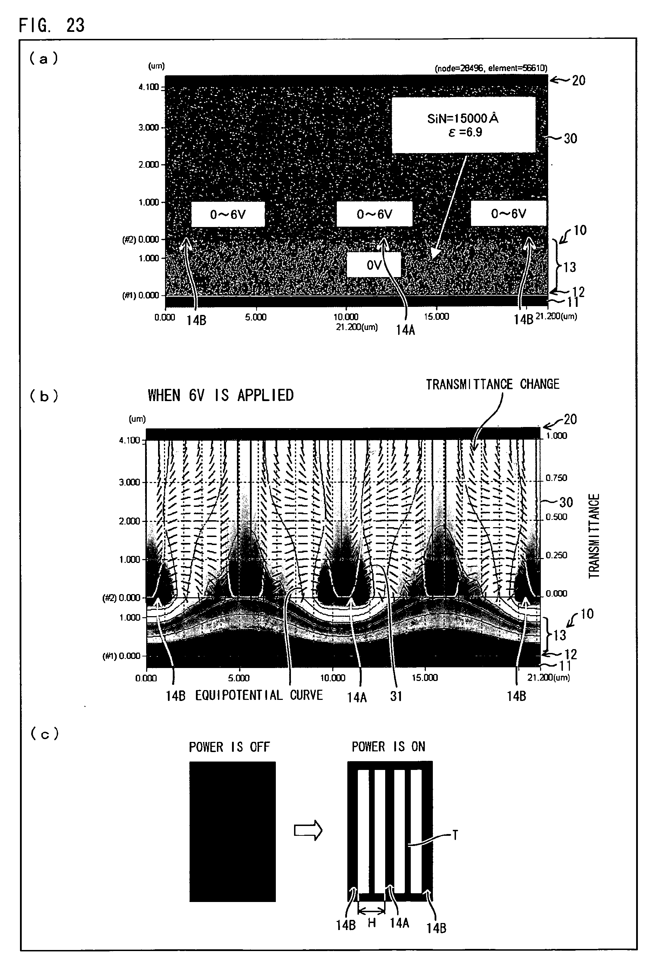

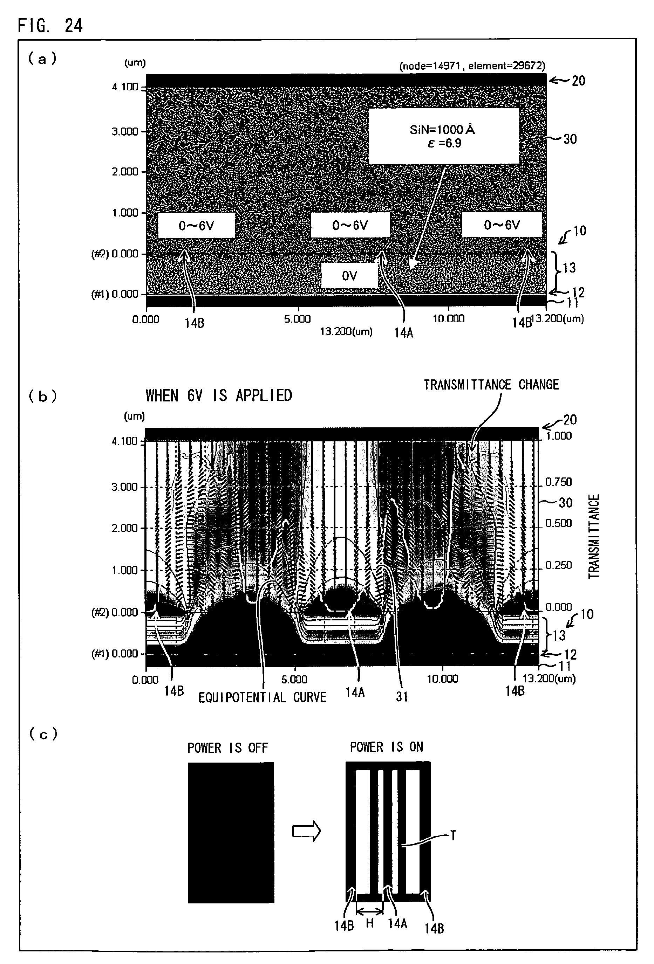

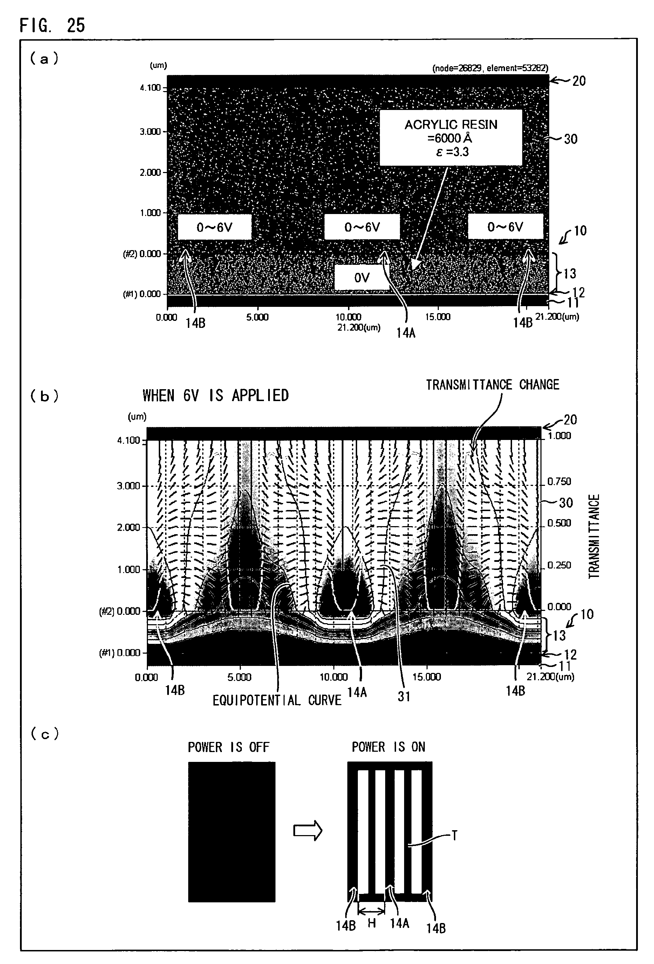

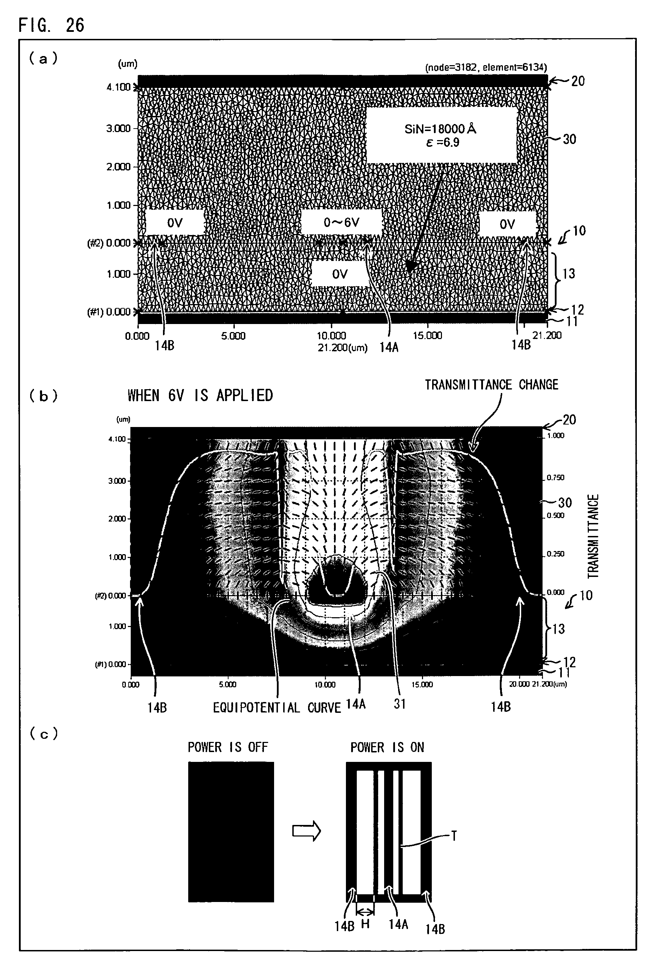

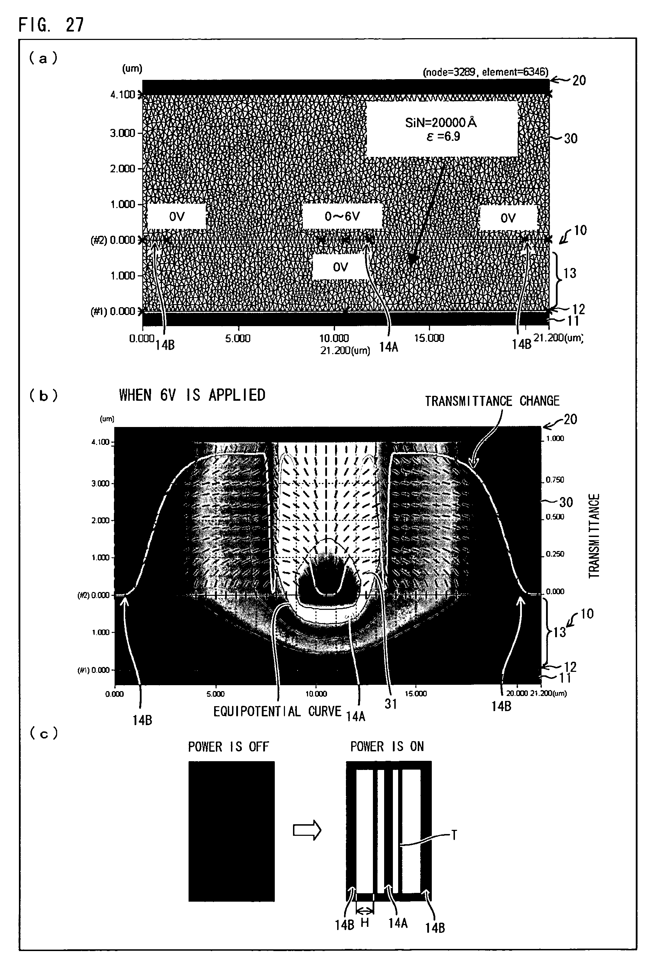

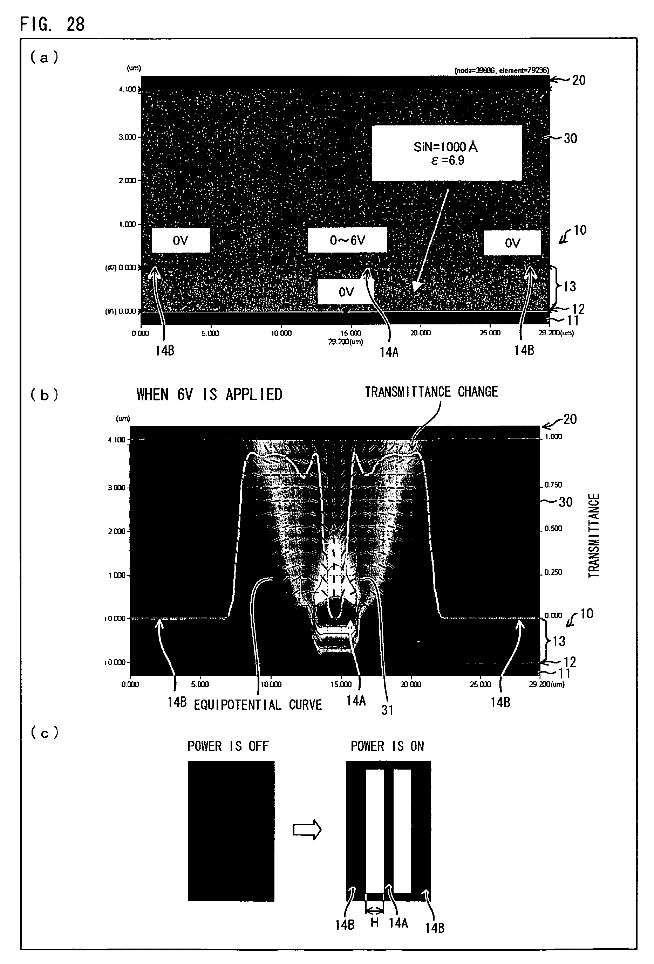

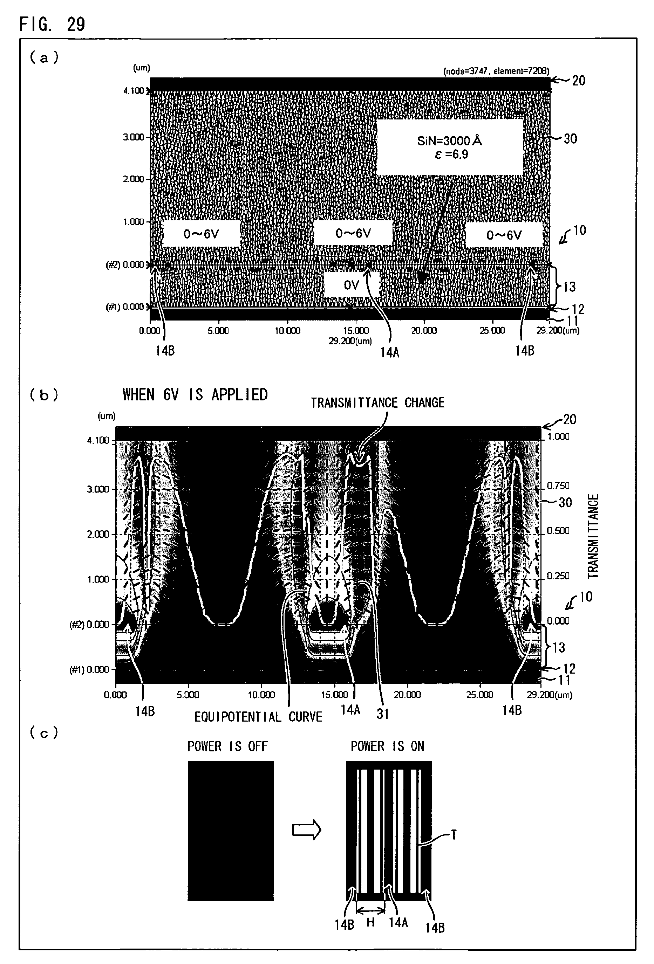

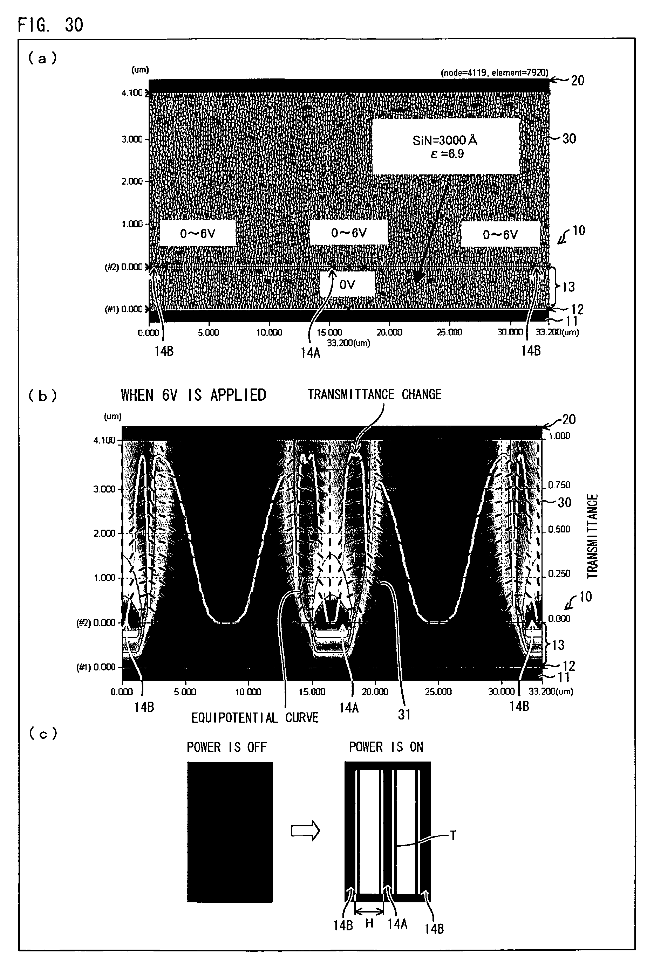

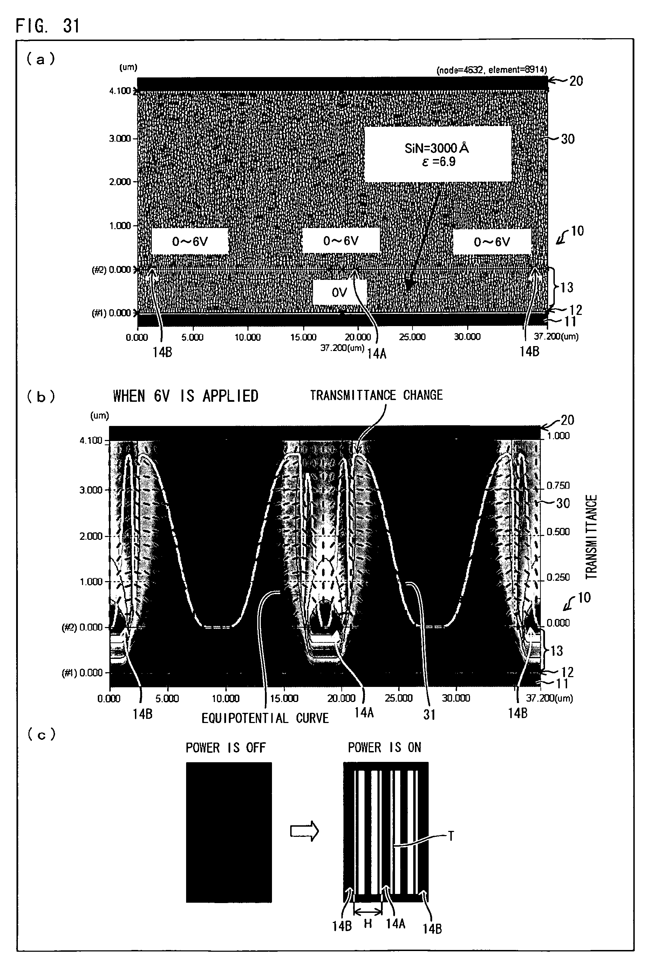

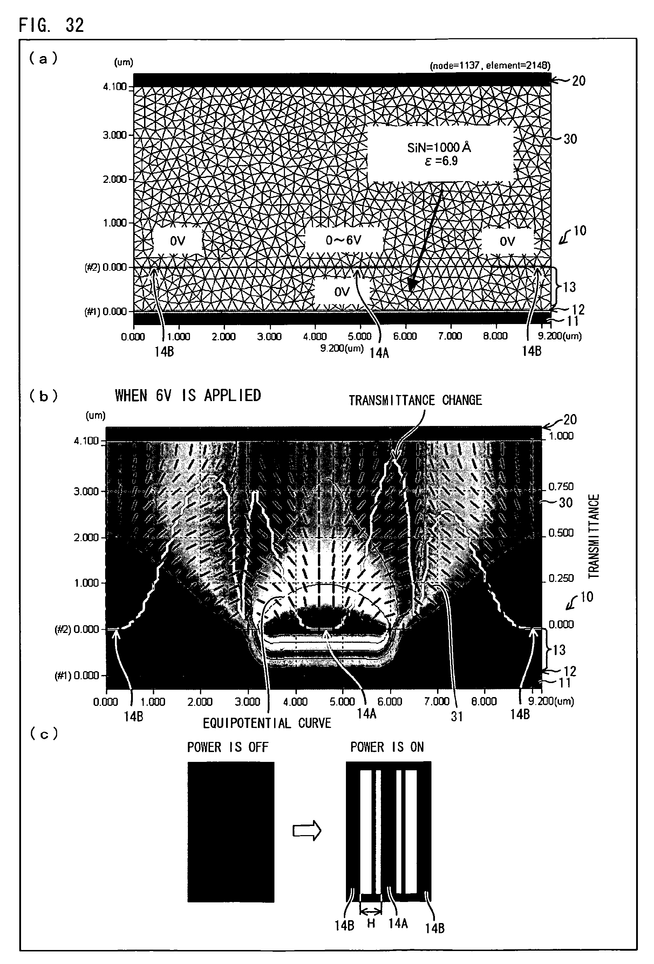

Fig. 1

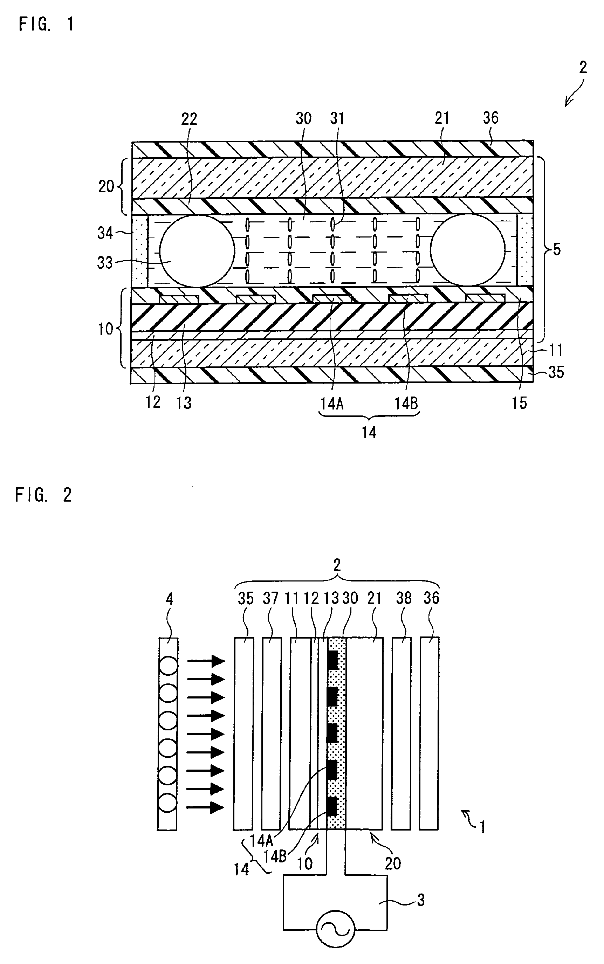

   Fig. 1 is a cross-sectional view schematically illustrating an outline configuration of a substantial part of a liquid crystal panel of an embodiment of the present invention.
Fig. 2
   Fig. 2 is a cross-sectional view schematically illustrating an outline configuration of a liquid crystal display device of an embodiment of the present invention.
Fig. 3

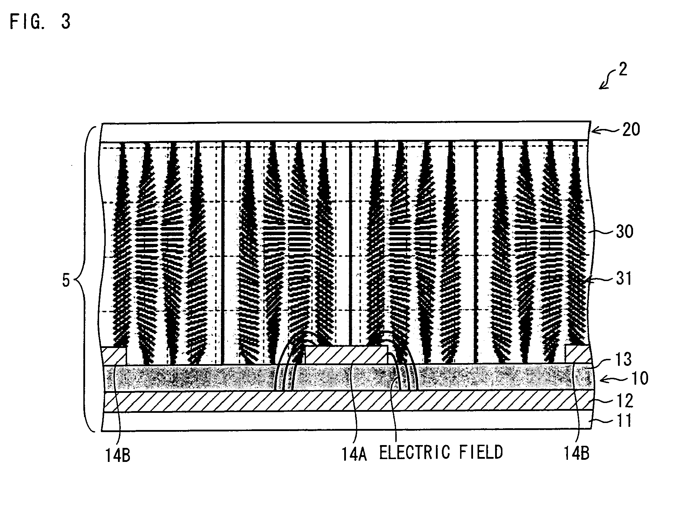

   Fig. 3 is a view illustrating a director distribution of liquid crystal molecules in a liquid crystal cell shown in Fig. 1.
Fig. 4
   (a) of Fig. 4 is a view illustrating conditions under which a voltage is applied to an upper electrode and a lower electrode in Example 1, (b) of Fig. 4 is a view illustrating transmittance, a director distribution of liquid crystal molecules, and an equipotential curve achieved when a voltage of 6V is applied to a first comb electrode in the upper electrode in (a) of Fig. 4, and (c) of Fig. 4 is a plan view illustrating how a pixel is displayed when power is off and how a pixel is displayed when power is on.
Fig. 5
   (a) of Fig. 5 is a view illustrating conditions under which a voltage is applied to an upper electrode and a lower electrode in Example 2, (b) of Fig. 5 is a view illustrating transmittance, a director distribution of liquid crystal molecules, and an equipotential curve achieved when a voltage of 6V is applied to each of a first comb electrode and a second comb electrode in the upper electrode in (a) of Fig. 5, and (c) of Fig. 5 is a plan view illustrating how a pixel is displayed when power is off and how a pixel is displayed when power is on.
Fig. 6
   (a) of Fig. 6 is a view illustrating conditions under which a voltage is applied to an upper electrode and a lower electrode in Example 3, (b) of Fig. 6 is a view illustrating transmittance, a director distribution of liquid crystal molecules, and an equipotential curve achieved when a voltage of 6V is applied to each of a first comb electrode and a second comb electrode in the upper electrode in (a) of Fig. 6, and (c) of Fig. 6 is a plan view illustrating how a pixel is displayed when power is off and how a pixel is displayed when power is on.
Fig. 7
   (a) of Fig. 7 is a view illustrating conditions under which a voltage is applied to an upper electrode and a lower electrode in Example 4, (b) of Fig. 7 is a view illustrating transmittance, a director distribution of liquid crystal molecules, and an equipotential curve achieved when a voltage of 6V is applied to a first comb electrode in the upper electrode in (a) of Fig. 7, and (c) of Fig. 7 is a plan view illustrating how a pixel is displayed when power is off and how a pixel is displayed when power is on.
Fig. 8
   (a) of Fig. 8 is a view illustrating conditions under which a voltage is applied to an upper electrode and a lower electrode in Example 5, (b) of Fig. 8 is a view illustrating transmittance, a director distribution of liquid crystal molecules, and an equipotential curve achieved when a voltage of 6V is applied to each of a first comb electrode and a second comb electrode in the upper electrode in (a) of Fig. 8, and (c) of Fig. 8 is a plan view illustrating how a pixel is displayed when power is off and how a pixel is displayed when power is on.
Fig. 9
   (a) of Fig. 9 is a view illustrating conditions under which a voltage is applied to an upper electrode and a lower electrode in Example 6, (b) of Fig. 9 is a view illustrating transmittance, a director distribution of liquid crystal molecules, and an equipotential curve achieved when a voltage of 6V is applied to a first comb electrode in the upper electrode in (a) of Fig. 9, and (c) of Fig. 9 is a plan view illustrating how a pixel is displayed when power is off and how a pixel is displayed when power is on.
Fig. 10
   (a) of Fig. 10 is a view illustrating conditions under which a voltage is applied to an upper electrode and a lower electrode in Example 7, (b) of Fig. 10 is a view illustrating transmittance, a director distribution of liquid crystal molecules, and an equipotential curve achieved when a voltage of 6V is applied to each of a first comb electrode and a second comb electrode in the upper electrode in (a) of Fig. 10, and (c) of Fig. 10 is a plan view illustrating how a pixel is displayed when power is off and how a pixel is displayed when power is on.
Fig. 11
   (a) of Fig. 11 is a view illustrating conditions under which a voltage is applied to an upper electrode and a lower electrode in Example 8, (b) of Fig. 11 is a view illustrating transmittance, a director distribution of liquid crystal molecules, and an equipotential curve achieved when a voltage of 6V is applied to a first comb electrode in the upper electrode in (a) of Fig. 11, and (c) of Fig. 11 is a plan view illustrating how a pixel is displayed when power is off and how a pixel is displayed when power is on.
Fig. 12
   (a) of Fig. 12 is a view illustrating conditions under which a voltage is applied to a first comb electrode and a second comb electrode in Comparative Example 1, (b) of Fig. 12 is a view illustrating transmittance, a director distribution of liquid crystal molecules, and an equipotential curve achieved when a voltage of 6V is applied to the first comb electrode in (a) of Fig. 12, and (c) of Fig. 12 is a plan view illustrating how a pixel is displayed when power is off and how a pixel is displayed when power is on.
Fig. 13
   (a) of Fig. 13 is a view illustrating conditions under which a voltage is applied to an upper electrode and a lower electrode in Comparative Example 2, (b) of Fig. 12 is a view illustrating transmittance and an equipotential curve achieved when a voltage of 6V is applied to each of a first comb electrode and a second comb electrode in the upper electrode in (a) of Fig. 13, and (c) of Fig. 13 is a plan view illustrating how a pixel is displayed when power is off and how a pixel is displayed when power is on.
Fig. 14
   (a) of Fig. 14 is a view illustrating conditions under which a voltage is applied to a first comb electrode and a second comb electrode in Comparative Example 3, (b) of Fig. 14 is a view illustrating transmittance, a director distribution of liquid crystal molecules, and an equipotential curve achieved when a voltage of 6V is applied to the first comb electrode in (a) of Fig. 14, and (c) of Fig. 14 is a plan view illustrating how a pixel is displayed when power is off and how a pixel is displayed when power is on.
Fig. 15
   (a) of Fig. 15 is a view illustrating conditions under which a voltage is applied to an upper electrode and a lower electrode in Comparative Example 4, (b) of Fig. 15 is a view illustrating transmittance and an equipotential curve achieved when a voltage of 6V is applied to each of a first comb electrode and a second comb electrode in the upper electrode in (a) of Fig. 15, and (c) of Fig. 15 is a plan view illustrating how a pixel is displayed when power is off and how a pixel is displayed when power is on.
Fig. 16
   (a) of Fig. 16 is a view illustrating conditions under which a voltage is applied to an upper electrode and a lower electrode in Example 9, (b) of Fig. 16 is a view illustrating transmittance, a director distribution of liquid crystal molecules, and an equipotential curve achieved when a voltage of 6V is applied to a first comb electrode in the upper electrode in (a) of Fig. 16, and (c) of Fig. 16 is a plan view illustrating how a pixel is displayed when power is off and how a pixel is displayed when power is on.
Fig. 17
   (a) of Fig. 17 is a view illustrating conditions under which a voltage is applied to an upper electrode and a lower electrode in Example 10, (b) of Fig. 17 is a view illustrating transmittance, a director distribution of liquid crystal molecules, and an equipotential curve achieved when a voltage of 6V is applied to a first comb electrode in the upper electrode in (a) of Fig. 17, and (c) of Fig. 17 is a plan view illustrating how a pixel is displayed when power is off and how a pixel is displayed when power is on.
Fig. 18
   (a) of Fig. 18 is a view illustrating conditions under which a voltage is applied to an upper electrode and a lower electrode in Example 11, (b) of Fig. 18 is a view illustrating transmittance, a director distribution of liquid crystal molecules, and an equipotential curve achieved when a voltage of 6V is applied to a first comb electrode in the upper electrode in (a) of Fig. 18, and (c) of Fig. 18 is a plan view illustrating how a pixel is displayed when power is off and how a pixel is displayed when power is on.
Fig. 19
   (a) of Fig. 19 is a view illustrating conditions under which a voltage is applied to an upper electrode and a lower electrode in Example 12, (b) of Fig. 19 is a view illustrating transmittance and an equipotential curve achieved when a voltage of 6V is applied to a first comb electrode in the upper electrode in (a) of Fig. 19, and (c) of Fig. 19 is a plan view illustrating how a pixel is displayed when power is off and how a pixel is displayed when power is on.
Fig. 20
   (a) of Fig. 20 is a view illustrating conditions under which a voltage is applied to an upper electrode and a lower electrode in Example 13, (b) of Fig. 20 is a view illustrating transmittance, a director distribution of liquid crystal molecules, and an equipotential curve achieved when a voltage of 6V is applied to a first comb electrode in the upper electrode in (a) of Fig. 20, and (c) of Fig. 20 is a plan view illustrating how a pixel is displayed when power is off and how a pixel is displayed when power is on.
Fig. 21
   (a) of Fig. 21 is a view illustrating conditions under which a voltage is applied to an upper electrode and a lower electrode in Example 14, (b) of Fig. 21 is a view illustrating transmittance, a director distribution of liquid crystal molecules, and an equipotential curve achieved when a voltage of 6V is applied to each of a first comb electrode and a second comb electrode in the upper electrode in (a) of Fig. 21, and (c) of Fig. 21 is a plan view illustrating how a pixel is displayed when power is off and how a pixel is displayed when power is on.
Fig. 22
   (a) of Fig. 22 is a view illustrating conditions under which a voltage is applied to an upper electrode and a lower electrode in Comparative Example 5, (b) of Fig. 22 is a view illustrating transmittance and an equipotential curve achieved when a voltage of 6V is applied to each of a first comb electrode and a second comb electrode in the upper electrode in (a) of Fig. 22, and (c) of Fig. 22 is a plan view illustrating how a pixel is displayed when power is off and how a pixel is displayed when power is on.
Fig. 23
   (a) of Fig. 23 is a view illustrating conditions under which a voltage is applied to an upper electrode and a lower electrode in Comparative Example 6, (b) of Fig. 23 is a view illustrating transmittance and an equipotential curve achieved when a voltage of 6V is applied to each of a first comb electrode and a second comb electrode in the upper electrode in (a) of Fig. 23, and (c) of Fig. 23 is a plan view illustrating how a pixel is displayed when power is off and how a pixel is displayed when power is on.
Fig. 24
   (a) of Fig. 24 is a view illustrating conditions under which a voltage is applied to an upper electrode and a lower electrode in Comparative Example 7, (b) of Fig. 24 is a view illustrating transmittance and an equipotential curve achieved when a voltage of 6V is applied to each of a first comb electrode and a second comb electrode in the upper electrode in (a) of Fig. 24, and (c) of Fig. 24 is a plan view illustrating how a pixel is displayed when power is off and how a pixel is displayed when power is on.
Fig. 25
   (a) of Fig. 25 is a view illustrating conditions under which a voltage is applied to an upper electrode and a lower electrode in Comparative Example 8, (b) of Fig. 25 is a view illustrating transmittance and an equipotential curve achieved when a voltage of 6V is applied to each of a first comb electrode and a second comb electrode in the upper electrode in (a) of Fig. 25, and (c) of Fig. 25 is a plan view illustrating how a pixel is displayed when power is off and how a pixel is displayed when power is on.
Fig. 26
   (a) of Fig. 26 is a view illustrating conditions under which a voltage is applied to an upper electrode and a lower electrode in Example 15, (b) of Fig. 26 is a view illustrating transmittance, a director distribution of liquid crystal molecules, and an equipotential curve achieved when a voltage of 6V is applied to a first comb electrode in the upper electrode in (a) of Fig. 26, and (c) of Fig. 26 is a plan view illustrating how a pixel is displayed when power is off and how a pixel is displayed when power is on.
Fig. 27
   (a) of Fig. 27 is a view illustrating conditions under which a voltage is applied to an upper electrode and a lower electrode in Comparative Example 9, (b) of Fig. 27 is a view illustrating transmittance, a director distribution of liquid crystal molecules, and an equipotential curve achieved when a voltage of 6V is applied to a first comb electrode in the upper electrode in (a) of Fig. 27, and (c) of Fig. 27 is a plan view illustrating how a pixel is displayed when power is off and how a pixel is displayed when power is on.
Fig. 28
   (a) of Fig. 28 is a view illustrating conditions under which a voltage is applied to an upper electrode and a lower electrode in Example 16, (b) of Fig. 28 is a view illustrating transmittance, a director distribution of liquid crystal molecules, and an equipotential curve achieved when a voltage of 6V is applied to a first comb electrode in the upper electrode in (a) of Fig. 28, and (c) of Fig. 28 is a plan view illustrating how a pixel is displayed when power is off and how a pixel is displayed when power is on.
Fig. 29
   (a) of Fig. 29 is a view illustrating conditions under which a voltage is applied to an upper electrode and a lower electrode in Example 17, (b) of Fig. 29 is a view illustrating transmittance, a director distribution of liquid crystal molecules, and an equipotential curve achieved when a voltage of 6V is applied to each of a first comb electrode and a second comb electrode in the upper electrode in (a) of Fig. 29, and (c) of Fig. 29 is a plan view illustrating how a pixel is displayed when power is off and how a pixel is displayed when power is on.
Fig. 30
   (a) of Fig. 30 is a view illustrating conditions under which a voltage is applied to an upper electrode and a lower electrode in Example 18, (b) of Fig. 30 is a view illustrating transmittance, a director distribution of liquid crystal molecules, and an equipotential curve achieved when a voltage of 6V is applied to each of a first comb electrode and a second comb electrode in the upper electrode in (a) of Fig. 30, and (c) of Fig. 30 is a plan view illustrating how a pixel is displayed when power is off and how a pixel is displayed when power is on.
Fig. 31
   (a) of Fig. 31 is a view illustrating conditions under which a voltage is applied to an upper electrode and a lower electrode in Example 19, (b) of Fig. 31 is a view illustrating transmittance, a director distribution of liquid crystal molecules, and an equipotential curve achieved when a voltage of 6V is applied to each of a first comb electrode and a second comb electrode in the upper electrode in (a) of Fig. 31, and (c) of Fig. 31 is a plan view illustrating how a pixel is displayed when power is off and how a pixel is displayed when power is on.
Fig. 32
   (a) of Fig. 32 is a view illustrating conditions under which a voltage is applied to an upper electrode and a lower electrode in Example 20, (b) of Fig. 32 is a view illustrating transmittance, a director distribution of liquid crystal molecules, and an equipotential curve achieved when a voltage of 6V is applied to a first comb electrode in the upper electrode in (a) of Fig. 32, and (c) of Fig. 32 is a plan view illustrating how a pixel is displayed when power is off and how a pixel is displayed when power is on.
Fig. 33

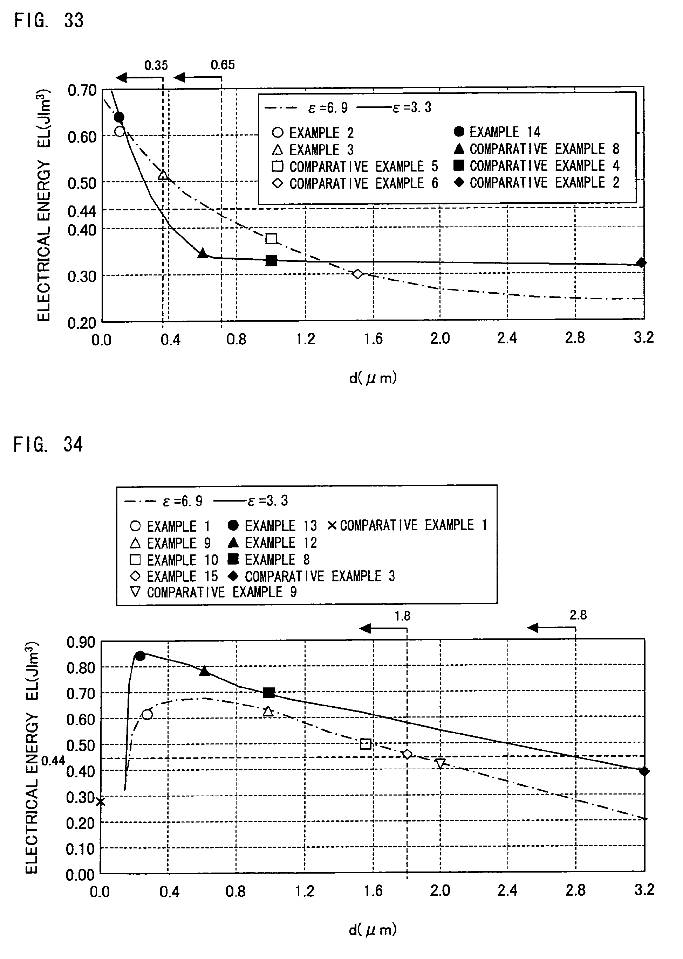

   Fig. 33 is a graph showing a relationship between an electrical energy EL and a thickness d of the insulating layer which relationship was obtained in a case where FFS driving was used.
Fig. 34
   Fig. 34 is a graph showing a relationship between an electrical energy EL and a thickness d of the insulating layer which relationship was obtained in a case where comb driving was used.
Fig. 35

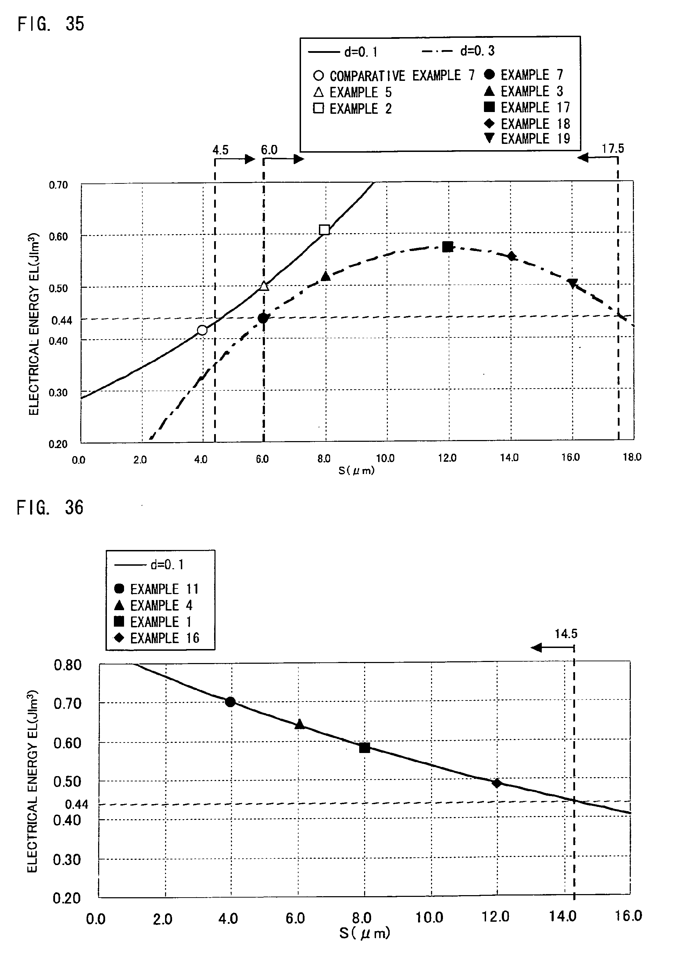

   Fig. 35 is a graph showing a relationship between an electrical energy EL and an electrode spacing S which relationship was obtained in a case where FFS driving was used.
Fig. 36
   Fig. 36 is a graph showing a relationship between an electrical energy EL and an electrode spacing S which relationship was obtained in a case where comb driving was used.
Fig. 37

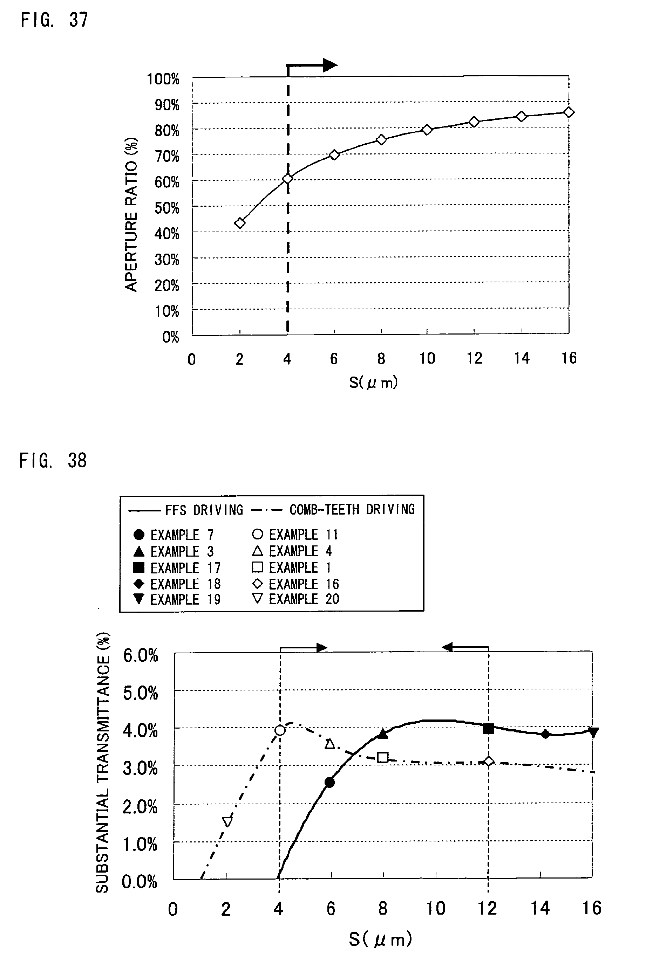

   Fig. 37 is a graph showing a relationship between an aperture ratio and an electrode spacing S.
Fig. 38
   Fig. 38 is a graph showing relationships between substantial transmittance and an electrode spacing S which relationships were obtained in a case where respective driving modes were used.
Fig. 39
   Fig. 39 is a cross-sectional view schematically illustrating a substantial part of a liquid crystal panel of another embodiment of the present invention.
Fig. 40
   Fig. 40 is a view illustrating a director distribution of liquid crystal molecules in a conventional vertical alignment type liquid crystal cell which director distribution is obtained in a case where a display mode according to which a lateral electric field is applied to the conventional vertical alignment type liquid crystal cell.

### Description of Embodiments

An embodiment of the present invention is described below with reference to Figs. 1 through 40.

Fig. 2 is a cross-sectional view schematically illustrating an outline configuration of a liquid crystal display device of the present embodiment.

As illustrated in Fig. 2, a liquid crystal display device 1 of the present embodiment includes a liquid crystal panel 2 (liquid crystal display element), a driving circuit 3, and a backlight 4 (illumination device). Configurations of the driving circuit 3 and the backlight 4 are identical to those of conventional ones, and therefore are not explained.

Fig. 1 is a cross-sectional view schematically illustrating an outline configuration of a substantial part of the liquid crystal panel 2. Fig. 3 is a view illustrating a director distribution of liquid crystal molecules in a liquid crystal cell shown in Fig. 1.

As illustrated in Figs. 1 and 2, the liquid crystal panel 2 of the present embodiment includes a pair of substrates 10 and 20 which are respectively provided as an electrode substrate and a counter substrate so as to face each other. The pair of substrates 10 and 20 sandwich a liquid crystal layer 30 which serves as a medium layer for display.

At least one of the pair of substrates 10 and 20, i.e., at least a substrate on a side where a viewer is present includes, as an insulating substrate (liquid crystal layer holding member, base substrate), a transparent substrate such as a glass substrate. Further, one surface of the substrate 10 which surface is opposed to the substrate 20 is provided with an alignment film 15 that is a so-called vertical alignment film, and one surface of the substrate 20 which surface is opposed to the substrate 10 is provided with an alignment film 22 that is also a so-called vertical alignment film.

The vertical alignment film is an alignment film that aligns, vertically with respect to a substrate surface, liquid crystal molecules of a liquid crystal layer, when no electric filed is applied. Note that meaning of the term "vertically" includes "substantially vertically".

As the substrate 10 (first substrate, electrode substrate), an array substrate such as a TFT array substrate can be used, for example. Meanwhile, as the substrate 20 (second substrate, counter substrate), a color filter substrate or the like can be used, for example.

That is, the substrate 10 may include a TFT etc. (not shown), and the substrate 20 may include a color filter (CF) (not shown) in addition to the alignment film 22. However, the present embodiment is not limited to this.

Moreover, it is needless to say that the substrate 10 and 20 may include an undercoat film, an overcoat film, etc. (not shown).

In the following explanation, it is assumed that a substrate on a display surface side (a substrate on a side where a viewer is present) is an upper substrate and the other substrate is a lower substrate. In Figs. 1 and 2, it is assumed that the substrate 10 is a lower substrate. However, the present embodiment is not limited to this.

The substrate 10 is configured such that an upper electrode 14 and a lower electrode 12 are disposed so as to overlap each other via an insulating layer 13. In the present embodiment, the "upper electrode" refers to an electrode on a side where the liquid crystal layer 30 is present which electrode is adjacent to the liquid crystal layer 30 via the alignment film 22, and the "lower electrode" refers to an electrode on a side where the glass substrate 11 that is a base substrate is present.

Specifically, the substrate 10 is configured such that the lower electrode 12, the insulating layer 13, the upper electrode 14, and the alignment film 15 are provided on the glass substrate 11 in this order.

The lower electrode 12 is an allover electrode and formed on the glass substrate 11 so as to cover a display area (i.e., an area surrounded by a sealing agent 34) of the substrate 10 and be formed substantially all over a surface of the glass substrate 11 which surface faces the substrate 20. The lower electrode 12 serves as a common electrode.

The insulating layer 13 is formed on the lower electrode 12 so as to cover the lower electrode 12.

The upper electrode 14 is a comb electrode. In the present embodiment, the liquid crystal panel 2 is provided so that a comb electrode 14A (first comb electrode) and a comb electrode 14B (second comb electrode) which are adjacent to each other can be driven independently of each other so that a driving method can be changed in the experiments later described.

The comb electrodes 14A and 14B may be formed in a linear shape, a letter V shape or a zigzag form.

In the present embodiment, the comb electrodes 14A and 14B which can be driven independently of each other are alternately disposed so that branch electrodes (branch lines) extending from trunk electrodes (trunk lines) of the respective comb electrodes 14A and 14B are engaged with each other.

However, the present embodiment is not limited to this. It is also possible that the adjacent comb electrodes 14A and 14B are provided so as to be driven independently of each other regardless of a driving method. Further, in a case where "comb driving" later described is used, both of the comb electrodes 14A and 14B need not necessarily to be provided. That is, the upper electrode 14 may be a single comb electrode.

The alignment film 15 is provided on the insulating layer 13 so as to cover the comb electrodes 14A and 14B.

As illustrated in Figs. 1 and 2, a polarizer 35 is provided on a surface of the substrate 10 which surface is opposite to the surface which faces the liquid crystal layer 30, and a polarizer 36 is provided on a surface of the substrate 20 which surface is opposite to the surface which faces the liquid crystal layer 30.

Further, as illustrated in Fig. 2, where necessary, a phase plate 37 is provided between the substrate 10 and the polarizer 35 and a phase plate 38 is provided between the substrate 20 and the polarizer 36. Note that the phase plate 37 or 38 may be provided only to one surface of the liquid crystal panel 2. In the case of a display device utilizing only transmitted light from a front surface, the phase plates 37 and 38 are dispensable.

A liquid crystal cell 5 of the liquid crystal panel 2 is formed by, for example, as shown in Fig. 1, (i) bonding the substrate 10 to the substrate 20 via a spacer 33 by use of a sealing agent 34 and (ii) filling and sealing a medium containing a liquid crystal material in a space between the substrates 10 and 20.

The liquid crystal material may be a p-type (positive type) liquid crystal material or may be an n-type (negative type) liquid crystal material.

The present embodiment mainly deals with an example in which the liquid crystal material is a p-type liquid crystal material, as shown in Fig. 2 and the experiments later described. However, the present embodiment is not limited to this. Even in a case where the liquid crystal material is an n-type liquid crystal material, a similar result can be obtained in accordance with a similar principle to the case where the p-type liquid crystal material is used.

In the present embodiment, a p-type nematic liquid crystal material can be used as the p-type liquid crystal material, for example. However, the present embodiment is not limited to this.

The liquid crystal panel 2 and the liquid crystal display device 1 forms electric field intensity distribution within the liquid crystal cell 5 due to electric filed application so as to achieve bend alignment of the liquid crystal material. The present embodiment suitably employs a liquid crystal material having a large refractive index anisotropy Δn or a liquid crystal material having a large dielectric constant anisotropy Δε. Examples of such p-type liquid crystal materials are F (fluorine) liquid crystal materials in addition to CN (cyano) liquid crystal materials (chiral nematic liquid crystal materials).

The liquid crystal panel 2 is formed by bonding, to the liquid crystal cell 5, the phase plates 37 and 38 and the polarizers 35 and 36 as described above.

For example, the polarizers 35 and 36 are provided so that transmission axes of the polarizers 35 and 36 are orthogonal to each other and an angle between a direction in which the comb electrodes 14A and 14B and each of the transmission axes of the polarizers 35 and 36 is 45 degrees.

As described above, the liquid crystal panel 2 has a configuration similar to an electrode configuration of a liquid crystal panel using a so-called FFS (Fringe Field Switching) mode in which a common electrode and a pixel electrode are disposed so as to overlap each other via an insulating layer. As such, a liquid crystal panel having the above configuration is hereinafter referred to as a liquid crystal panel of an FFS structure.

However, the liquid crystal panel 2 of the present invention merely employs, as an electrode configuration, the FFS structure. That is, the liquid crystal panel 2 of the present invention looks similar to, but is utterly different from a so-called FFS mode liquid crystal panel.

An FFS mode liquid crystal panel shows homogeneous alignment in which a longer axis direction of liquid crystal molecules sandwiched between a pair of substrates is parallel to a substrate surface when no voltage is applied. In contrast to this, the liquid crystal panel 2 of the present invention shows homeotropic alignment in which a longer axis direction of the liquid crystal molecules 31 sandwiched between the pair of substrates 10 and 20 is vertical to a substrate surface when no voltage is applied (see Fig. 1). As such, the liquid crystal panel 2 of the present invention is utterly different from the FFS mode liquid crystal panel in behavior of liquid crystal molecules.

In the FFS mode, an electrode spacing S (distance between electrodes) is set to be shorter than an electrode width L of a comb electrode and a cell gap (thickness of a liquid crystal layer) D so that a fringe electric field is produced. Thus, display is carried out.

However, in the present embodiment, an electrode spacing S is set to be longer than an electrode width L and a cell gap D, as shown in Examples later described. Note, however, that in the present invention, overall transmittance of the liquid crystal cell 5 is not necessarily correlated with the cell gap D. As such, the cell gap D is not limited in particular.

In the present embodiment, the liquid crystal panel 2 having the FFS structure as described above is driven by two types of driving methods.

Hereinafter, driving carried out between the comb electrodes 14A and 14B which are adjacent to the liquid crystal layer 30 via the alignment film 15 is referred to as "comb driving", and driving carried out between the comb electrodes 14A and 14B and the lower electrode 12 that is provided below the comb electrodes 14A and 14B via the insulating layer 13 is referred to as "FFS driving".

In a case where the liquid crystal panel 2 is comb-driven, the comb electrode 14A serves as a pixel electrode, and the comb electrode 14B serves as a common electrode. Note that in a case where the comb-driving is carried out, the lower electrode 12 is set to 0V.

In a case where the liquid crystal panel 2 is FFS-driven, each of the comb electrodes 14A and 14B serves as a pixel electrode, and the lower electrode 12 serves as a common electrode.

As described above, the liquid crystal panel 2 of the present embodiment employs a display mode that is utterly different from the FFS mode.

However, since the liquid crystal panel 2 has the FFS structure as described above, not only liquid crystal molecules 31 which are provided between the comb electrodes 14A and 14B, but also liquid crystal molecules 31 which are provided above the comb electrodes 14A and 14B are driven, unlike the conventional liquid crystal panel 102 shown in Fig. 40 which employs the above-mentioned display mode. As such, the liquid crystal panel 2 has an advantage such that an aperture ratio can be made higher as compared with the liquid crystal panel 102 having the structure shown in Fig. 40.

Further, according to the liquid crystal panel 2 of the present embodiment, because driving with the use of a lateral electric field is carried out in a vertical alignment mode as described above, a bent electric field (an arc electric field) is formed due to electric field application and two domains having director directions of the liquid crystal molecules 31 which director directions are different by 180 degrees from each other are formed, as shown in Fig. 3. The liquid crystal molecules 31 are aligned in accordance with electric field intensity distribution in the liquid crystal cell 5 and binding force from an interface. As a result, a wide viewing angle characteristic can be obtained.

Note that due to voltage application, the liquid crystal molecules 31 continuously transit from the homeotropic alignment to the bend alignment. That is, in normal driving, the liquid crystal layer 30 always exhibits the bend alignment as shown in Fig. 3 and a high-speed response can be achieved in a response from gray scale level to another gray scale level.

According to the liquid crystal panel 2, while a high contrast due to the vertical alignment is maintained, driving with the use of a lateral electric field is carried out so that a direction in which the liquid crystal molecules 31 are aligned is defined. Accordingly, it is not necessary to control alignment by using a rib as in an MVA mode. Consequently, the liquid crystal panel 2 has an excellent viewing angle characteristic in a simple pixel configuration.

That is, the liquid crystal panel 2 has advantages such as simple structure, easy manufacturing, low manufacturing cost in addition to the advantages such as high-speed response due to bend alignment, wide viewing angle due to self-compensation type alignment, high contrast due to vertical alignment.

The inventors of the present invention found that in a case where the vertical alignment type liquid crystal panel 2 having the FFS structure is driven with the use of a lateral electric field, an aperture ratio can be improved while high-speed response, wide viewing angle characteristic, and high contrast are maintained, as compared to the conventional liquid crystal panel 102 in which a vertical alignment type liquid crystal panel 2 is driven with the use of a lateral electric field.

At the same time, however, the inventors of the present invention also found that a voltage reduction cannot be necessarily achieved only by employing the FFS structure in a liquid crystal panel which employs a display mode according to which a vertical alignment type liquid crystal panel is driven with the use of a lateral electric field as described above.

In view of this, the inventors of the present invention carried out simulation and experiments to find out conditions required for a voltage reduction in the liquid crystal panel 2 having the FFS structure.

As a result, the inventors of the present invention found that a driving voltage reduction effect and a transmittance improvement effect can be obtained in the liquid crystal panel 2 having the FFS structure by selecting/setting a material (relative permittivity s) of the insulating layer 13 and electrode width L/electrode spacing S so that "electrical energy EL" is not less than 0.44J/m³ (joule/cubic meter) which "electrical energy EL" is an average electrical energy in a part of the liquid crystal layer which part is 0.1µm deep from a surface of the substrate 20 and which part overlaps the comb electrodes 14A and 14B when the liquid crystal layer 30 is viewed from a direction vertical to a substrate surface.

Moreover, the inventors of the present invention found that especially in a case where FFS driving is carried out, a driving voltage reduction effect and a remarkable transmittance improvement effect can be obtained by selecting/ setting the material (relative permittivity ε) and a thickness d of the insulating layer 13 and the electrode width L/electrode spacing S so that the electrical energy EL is not less than 0.6J/m³.

The electrical energy EL is calculated by dismantling a liquid crystal panel, measuring permittivity of each layer by the law of the art, and calculating based on the measured value.

With reference to Examples, the following more specifically describes a method for manufacturing the liquid crystal panel 2, and verifies the above effects based on experiments and simulation.

### [Example 1]

First, ITO (Indium Tin Oxide) was formed on an entire surface of a glass substrate 11 by sputtering so as to have a thickness of 1400Å, as shown in Fig. 1. Thus, a lower electrode 12 which is an allover electrode which covers an entire main surface of the glass substrate 11 was formed.

Next, silicon nitride (SiN) having a relative permittivity ε of 6.9 was formed by sputtering so as to cover an entire surface of the lower electrode 12. Thus, an insulating layer 13 made of SiN having a thickness d of 0.1µm (1000Å) was formed on the lower electrode 12.

Subsequently, comb electrodes 14A and 14B which were made of ITO and which had an thickness of 1400Å, an electrode width L of 2.6 µm, and an electrode spacing S of 8.0 µm was formed, as an upper electrode, on the insulating layer 13.

Then, an alignment film material "JALS-204" (Product Name, 5 % by weight (solid content), γ-butyrolactone solution, produced by JSR Corporation) was applied, by a spin coat method, on the insulating layer 13 so as to cover the comb electrodes 14A and 14B. Then, the insulating layer 13 with the alignment film material was baked at 200 °C for 2 hours so as to form a substrate 10 that is provided with an alignment film 15, which is a vertical alignment film, on a surface which faces a liquid crystal layer 30.

Meanwhile, only an alignment film 22 was formed on a glass substrate 21 by using the same material and process as the alignment film 15. Thus, a substrate 20 was formed. A dried film thickness of each of the alignment films 15 and 22 thus obtained was 1000Å.

Subsequently, on one of the substrates 10 and 20, resin beads "Micropearl SP20375" (Product Name, manufactured by Sekisui Chemical Co. Ltd.), as a spacer 33, that had a diameter of 3.75 µm were dispersed. Meanwhile, on the other which faces the one, a sealing resin "Struct Bond XN-21-S" (Product Name, produced by Mitsui Toatsu Chemicals, Inc.), as a sealing agent 34, was printed.

Next, the substrates 10 and 20 were bonded and baked at 135 °C for 1 hour so as to fabricate a liquid crystal cell 5.

Then, in the liquid crystal cell 5, a positive-type liquid crystal material (manufactured by Merck Ltd., Δε = 22 and Δn = 0.15) as a liquid crystal material was filled and sealed by a vacuum filling method so as to form a liquid crystal layer 30.

Subsequently, polarizers 35 and 36 were bonded to front and back surfaces of the liquid crystal cell 5 so that (i) transmission axes of the polarizers 35 and 36 crossed at right angles and (ii) an angle between a direction in which the comb electrodes 14A and 14B were extended and the transmission axes of the polarizers 35 and 36 was 45°. Thus, a liquid crystal panel 2 (liquid crystal display element) having the configuration shown in Fig. 1 was fabricated.

The liquid crystal panel 2 thus fabricated was placed on a backlight 4 as shown in Fig. 2 and was then comb-driven so that a voltage-transmittance change (hereinafter referred to as "actual measurement T") at a front of the liquid crystal panel 2 was measured by using "BM5A" (produced by Topcon Corporation). Note that transmittance in the actual measurement T was obtained by dividing luminance of the liquid crystal panel 2 by luminance of the backlight 4.

Meanwhile, a voltage-transmittance change (hereinafter referred to as "SimT") measured in a case where a model having the FFS structure shown in Fig. 1 was comb-driven, as a liquid crystal panel, under the same condition as the actual measurement was obtained by running a simulation with the use of "LCD-MASTER" (produced by Shintech, Inc.).

Table 1 collectively shows the SimT, relative permittivity ε and thickness d of the insulating layer 13, and electrode width L/electrode spacing S of the comb electrodes 14A and 14B. Table 6 shows the actual measurement T and the electrical energy EL in addition to these values. (a) of Fig. 4 shows an applied voltage in the simulation, and (b) of Fig. 4 shows transmittance, a director distribution of the liquid crystal molecules 31, and an equipotential curve achieved when a voltage of 6V is applied to the comb electrode 14A in (a) of Fig. 4 in the simulation. Note that, in the present example, the comb electrode 14B is set to 0V, as shown in (b) of Fig. 4. (c) of Fig. 4 shows how a pixel is displayed when the power is off in the simulation and how a pixel is displayed when the power is on in the simulation.

### [Example 2]

Actual measurement T and SimT were obtained in a similar manner to the Example 1 except for that FFS driving was carried out instead of comb driving.

That is, in the present example, a liquid crystal panel 2 similar to that of the Example 1 was fabricated by using a material and a process similar to the Example 1, and the measurement T was measured on the backlight 4 by using the "BM5A" as in the Example 1. Moreover, SimT obtained in a case where a model having an FFS structure similar to that of the Example 1 was FFS-driven under the same condition as the actual measurement was measured by running a simulation with the use of the "LCD-MASTER" as in the Example 1.

Table 1 collectively shows the SimT, relative permittivity ε and thickness d of the insulating layer 13, and electrode width L/electrode spacing S of the comb electrodes 14A and 14B. Table 8 shows the actual measurement T and the electrical energy EL in addition to these values. (a) of Fig. 5 shows an applied voltage in the simulation, and (b) of Fig. 5 shows transmittance, a director distribution of the liquid crystal molecules 31, and an equipotential curve achieved when a voltage of 6V is applied to each of the comb electrodes 14A and 14B in (a) of Fig. 5 in the simulation. (c) of Fig. 5 shows how a pixel is displayed when the power is off in the simulation and how a pixel is displayed when the power is on in the simulation.

### [Comparative Example 1]

First, ITO was formed on an entire surface of a glass substrate 111 which is similar to the glass substrate 11 by sputtering so as to have a thickness of 1400Å, as shown in Fig. 40. Subsequently, this ITO film was patterned so that a comb electrode 112 (first comb electrode) and a comb electrode 113 (second comb electrode) which were made of ITO and which had an electrode width L of 2.6 µm and an electrode spacing S of 8.0 µm were formed on the glass substrate 111 as a pixel electrode and a common electrode, respectively.

Then, an alignment film material "JALS-204" (Product Name, 5 % by weight (solid content), γ-butyrolactone solution, produced by JSR Corporation) which was the same as that of the Example 1 was applied, by a spin coat method, on the glass substrate 111 so as to cover the comb electrodes 112 and 113. Then, the glass substrate 111 with the alignment film material was baked at 200 °C for 2 hours as in the Example 1 so as to form a substrate 110 that is provided with a vertical alignment film (not shown) on a surface which faces a liquid crystal layer 130.

Meanwhile, only a vertical alignment film (not shown) was formed on a glass substrate 321 which is similar to the glass substrate 21 by using the same material and process as the vertical alignment film. Thus, a substrate 120 was formed. A dried film thickness of each of the vertical alignment films thus obtained was 1000Å.

Subsequently, on one of the substrates 110 and 120, resin beads "Micropearl SP20375", as a spacer, that had a diameter of 3.75 µm were dispersed as in the Example 1. Meanwhile, on the other which faces the one, a sealing resin "Struct Bond XN-21-S", as a sealing agent, was printed as in the Example 1.

Next, the substrates 110 and 120 were bonded and baked at 135 °C for 1 hour as in the Example 1 so as to fabricate a liquid crystal cell 105 for use in comparison.

Then, in the liquid crystal cell 105, a positive-type liquid crystal material (manufactured by Merck Ltd., Δε = 22 and Δn = 0.15) same as the Example 1 as a liquid crystal material was filled and sealed by a vacuum filling method so as to form a liquid crystal layer 130.

Subsequently, polarizers (not shown) similar to those of the Example 1 were bonded to front and back surfaces of the liquid crystal cell 105 so that (i) transmission axes of the polarizers crossed at right angles and (ii) an angle between a direction in which the comb electrodes 112 and 113 were extended and the transmission axes of the polarizers was 45°. Thus, a liquid crystal panel 102 (liquid crystal display element) for use in comparison having the configuration shown in Fig. 40 was fabricated.

The liquid crystal panel 102 thus fabricated was placed on a backlight and was then comb-driven as in the Example 1. Thus, an actual measurement T at a front of the liquid crystal panel 102 was measured by using the "BM5A" (produced by Topcon Corporation) as in the Example 1. Note that transmittance in the actual measurement T was obtained by dividing panel luminance by backlight luminance as in the Example 1.

Meanwhile, SimT measure in a case where a model having the FFS structure shown in Fig. 40 was comb-driven, as a liquid crystal panel, under the same condition as the actual measurement was obtained by running a simulation with the use of the "LCD-MASTER" as in the Example 1.

Table 2 collectively shows the SimT and electrode width L/electrode spacing S of the comb electrodes 112 and 113. Table 6 shows the actual measurement T and the electrical energy EL in addition to these values. (a) of Fig. 12 shows an applied voltage in the simulation, and (b) of Fig. 12 shows transmittance, a director distribution of the liquid crystal molecules 131, and an equipotential curve achieved when a voltage of 6V is applied to the comb electrode 112 in (a) of Fig. 12 in the simulation. Note that, in the present comparative example, the comb electrode 113 is set to 0V, as shown in (b) of Fig. 12. (c) of Fig. 12 shows how a pixel is displayed in a case where power is off in the simulation and how a pixel is displayed in a case where power is on in the simulation.

### [Comparative Example 2]

First, ITO was formed on an entire surface of a glass substrate 11 by sputtering so as to have a thickness of 1400Å, as shown in Fig. 1. Thus, a lower electrode 12 which is an allover electrode which covers an entire main surface of the glass substrate 11 was formed.

Next, acrylic resin (manufactured by JSR Corporation, Product Name "OPTOMER SS") having a relative permittivity ε of 3.3 was formed, by a spin coat method, so as to cover an entire surface of the lower electrode 12. Thus, an insulating layer 13 which was made of the acrylic resin and which had a thickness d of 3.2 µm (32000Å) was formed on the lower electrode 12.

Subsequently, comb electrodes 14A and 14B which were made of ITO and which had a thickness of 1400Å, an electrode width L of 2.6 µm, and an electrode spacing S of 8.0 µm were formed, as an upper electrode, on the insulating layer 13.

Then, an alignment film material "JALS-204" (Product Name, 5 % by weight (solid content), γ-butyrolactone solution, produced by JSR Corporation) which was the same as that of the Example 2 was applied, by a spin coat method, on the insulating layer 13 so as to cover the comb electrodes 14A and 14B. Then, the insulating layer 13 with the alignment film material was baked at 200 °C for 2 hours so as to form a substrate 10 that was provided with an alignment film 15 which was a vertical alignment film on a surface which faces a liquid crystal layer 30.

Meanwhile, only an alignment film 22 was formed on a glass substrate 21 by using the same material and process as the alignment film 15. Thus, a substrate 20 was formed. A dried film thickness of each of the alignment films 15 and 22 thus obtained was 1000Å.

Subsequently, on one of the substrates 10 and 20, resin beads "Micropearl SP20375", as a spacer 33, that had a diameter of 3.75 µm were dispersed as in the Example 2. Meanwhile, on the other which faces the one, a sealing resin "Struct Bond XN-21S", as a sealing agent, was printed as in the Example 2.

Next, the substrates 10 and 20 were bonded and baked at 135 °C for 1 hour so as to fabricate a liquid crystal cell 5 for use in comparison.

Then, in the liquid crystal cell 5 for use in comparison, a positive-type liquid crystal material (manufactured by Merck Ltd., Δε = 22 and Δn = 0.15) same as that of the Example 2, as a liquid crystal material, was filled and sealed by a vacuum filling method so as to form a liquid crystal layer 30.

Subsequently, polarizers 35 and 36 similar to those of the Example 2 were bonded to front and back surfaces of the liquid crystal cell 5 for use in comparison so that (i) transmission axes of the polarizers 35 and 36 crossed at right angles and (ii) an angle between a direction in which the comb electrodes 14A and 14B were extended and the transmission axes of the polarizers 35 and 36 was 45°. Thus, a liquid crystal panel 2 (liquid crystal display element) for use in comparison which is different from the liquid crystal cell 5 fabricated in the Example 2 in material and thickness d of the insulating layer 13 was fabricated.

The liquid crystal panel 2 for use in comparison thus fabricated was placed on a backlight 4 and was then comb-driven as in the Example 2. Thus, an actual measurement T at a front of the liquid crystal panel 102 was measured by using the "BM5A" (manufactured by Topcon Corporation) as in the Example 2.

Meanwhile, SimT measured in a case where a model having the FFS structure shown in Fig. 1 was comb-driven, as a liquid crystal panel, under the same condition as the actual measurement was obtained by running a simulation with the use of the "LCD-MASTER" as in the Example 2.

Table 2 collectively shows the SimT, relative permittivity ε and a thickness d of the insulating layer 13, and electrode width L/electrode spacing S of the comb electrodes 14A and 14B. Table 9 shows the actual measurement T and the electrical energy EL in addition to these values. (a) of Fig. 13 shows an applied voltage in the simulation, and (b) of Fig. 13 shows transmittance and an equipotential curve achieved when a voltage of 6V is applied to each of the comb electrodes 14A and 14B in (a) of Fig. 13 in the simulation. (c) of Fig. 13 shows how a pixel is displayed in a case where power is off in the simulation and how a pixel is displayed in a case where power is on in the simulation.

In each of the Examples 1 and 2 and the Comparative Examples 1 and 2, it was confirmed that there is a correlation between a voltage-transmittance (V-T) curve of SimT and a voltage-transmittance (V-T) curve of actual measurement T. In view of this, in the following examples and comparative examples, only a simulation was carried out. Note that a comb electrode 14B was set to 0V in a case where comb driving was carried out in the following examples and comparative examples in which a two-layer electrode structure made of an upper electrode and a lower electrode was employed.

### [Example 3]

SimT was obtained in a similar manner to the Example 2 except for that the thickness of the insulating layer 13 was changed from 0.1 µm to 0.3 µm (3000Å).

Table 1 collectively shows the SimT, relative permittivity s and thickness d of the insulating layer 13, and electrode width L/electrode spacing S of the comb electrodes 14A and 14B. Table 8 shows the electrical energy EL in addition to these values. (a) of Fig. 6 shows an applied voltage in the simulation, and (b) of Fig. 6 shows transmittance, a director distribution of the liquid crystal molecules 31, and an equipotential curve achieved when a voltage of 6V is applied to each of the comb electrodes 14A and 14B in (a) of Fig. 6 in the simulation. (c) of Fig. 6 shows how a pixel is displayed in a case where power is off in the simulation and how a pixel is displayed in a case where power is on in the simulation.

### [Example 4]

SimT was obtained in a similar manner to the Example 1 except for that the electrode width L/electrode spacing S of the comb electrodes 14A and 14B was changed from 2.6 µm/8.0 µm to 2.6µm/6.0 µm.

Table 1 collectively shows the SimT, relative permittivity ε and thickness d of the insulating layer 13, and electrode width L/electrode spacing S of the comb electrodes 14A and 14B. Table 6 shows the electrical energy EL in addition to these values. (a) of Fig. 7 shows an applied voltage in the simulation, and (b) of Fig. 7 shows transmittance, a director distribution of the liquid crystal molecules 31, and an equipotential curve achieved when a voltage of 6V is applied to the comb electrode 14A in (a) of Fig. 7 in the simulation. (c) of Fig. 7 shows how a pixel is displayed in a case where power is off in the simulation and how a pixel is displayed in a case where power is on in the simulation.

### [Example 5]

SimT was obtained in a similar manner to the Example 2 except for that the electrode width L/ electrode spacing S of the comb electrodes 14A and 14B was changed from 2.6 µm/8.0 µm to 2.6µm/6.0 µm.

Table 1 collectively shows the SimT, relative permittivity ε and thickness d of the insulating layer 13, and electrode width L/electrode spacing S of the comb electrodes 14A and 14B. Table 8 shows the electrical energy EL in addition to these values. (a) of Fig. 8 shows an applied voltage in the simulation, and (b) of Fig. 8 shows transmittance, a director distribution of the liquid crystal molecules 31, and an equipotential curve achieved when a voltage of 6V is applied to each of the comb electrodes 14A and 14B in (a) of Fig. 8 in the simulation. (c) of Fig. 8 shows how a pixel is displayed in a case where power is off in the simulation and how a pixel is displayed in a case where power is on in the simulation.

### [Example 6]

SimT was obtained in a similar manner to the Example 4 except for that the insulating layer 13 was changed from a SiN film having a relative permittivity ε of 6.9 and a thickness d of 0.1 µm to an acrylic resin (produced by JSR Corporation, Product Name "OPTOMER SS") having a relative permittivity s of 3.3 and a thickness d of 3.2 µm (32000Å).

Table 1 collectively shows the SimT, relative permittivity ε and thickness d of the insulating layer 13, and electrode width L/electrode spacing S of the comb electrodes 14A and 14B. Table 7 shows the electrical energy EL in addition to these values. (a) of Fig. 9 shows an applied voltage in the simulation, and (b) of Fig. 9 shows transmittance, a director distribution of the liquid crystal molecules 31, and an equipotential curve achieved when a voltage of 6V is applied to the comb electrode 14A in (a) of Fig. 9 in the simulation. (c) of Fig. 9 shows how a pixel is displayed in a case where power is off in the simulation and how a pixel is displayed in a case where power is on in the simulation.

### [Example 7]

SimT was obtained in a similar manner to the Example 3 except for that the electrode width L/electrode spacing S of the comb electrodes 14A and 14B was changed from 2.6 µm/8.0 µm to 2.6µm/6.0 µm.

Table 1 collectively shows the SimT, relative permittivity s and thickness d of the insulating layer 13, and electrode width L/electrode spacing S of the comb electrodes 14A and 14B. Table 8 shows the electrical energy EL in addition to these values. (a) of Fig. 10 shows an applied voltage in the simulation, and (b) of Fig. 10 shows transmittance, a director distribution of the liquid crystal molecules 31, and an equipotential curve achieved when a voltage of 6V is applied to each of the comb electrodes 14A and 14B in (a) of Fig. 10 in the simulation. (c) of Fig. 10 shows how a pixel is displayed in a case where power is off in the simulation and how a pixel is displayed in a case where power is on in the simulation.

### [Example 8]

SimT was obtained in a similar manner to the Example 1 except for that the insulating layer 13 was changed from a SiN film having a relative permittivity ε of 6.9 and a thickness d of 0.1 µm to an acrylic resin (produced by JSR Corporation, Product Name "OPTOMER SS") having a relative permittivity ε of 3.3 and a thickness d of 1.0 µm (10000Å).

Table 1 collectively shows the SimT, relative permittivity ε and thickness d of the insulating layer 13, and electrode width L/electrode spacing S of the comb electrodes 14A and 14B. Table 7 shows the electrical energy EL in addition to these values. (a) of Fig. 11 shows an applied voltage in the simulation, and (b) of Fig. 11 shows transmittance, a director distribution of the liquid crystal molecules 31, and an equipotential curve achieved when a voltage of 6V is applied to the comb electrode 14A in (a) of Fig. 11 in the simulation. (c) of Fig. 11 shows how a pixel is displayed in a case where power is off in the simulation and how a pixel is displayed in a case where power is on in the simulation.

### [Comparative Example 3]

Actual measurement T and SimT were obtained in a similar manner to the Comparative Example 2 except for that comb driving was carried out instead of FFS driving. In other words, SimT was obtained in a similar manner to the Example 1 except for that the insulating layer 13 was changed from a SiN film having a relative permittivity ε of 6.9 and a thickness d of 0.1 µm to an acrylic resin (produced by JSR Corporation, Product Name "OPTOMER SS") having a relative permittivity ε of 3.3 and a thickness d of 3.2 µm (32000Å).

Table 2 collectively shows the SimT, relative permittivity s and thickness d of the insulating layer 13, and electrode width L/electrode spacing S of the comb electrodes 14A and 14B. Table 7 shows the actual measurement T and the electrical energy EL in addition to these values. (a) of Fig. 14 shows an applied voltage in the simulation, and (b) of Fig. 14 shows transmittance, a director distribution of the liquid crystal molecules 31, and an equipotential curve achieved when a voltage of 6V is applied to the comb electrode 14A in (a) of Fig. 13 in the simulation. (c) of Fig. 14 shows how a pixel is displayed in a case where power is off in the simulation and how a pixel is displayed in a case where power is on in the simulation.

### [Comparative Example 4]

SimT was obtained in a similar manner to the Comparative Example 2 except for that the thickness d of the insulating layer 13 was changed from 3.2 µm (32000Å) to 1.0 µm (10000Å).

Table 2 collectively shows the SimT, relative permittivity ε and thickness d of the insulating layer 13, and electrode width L/electrode spacing S of the comb electrodes 14A and 14B. Table 9 shows the electrical energy EL in addition to these values. (a) of Fig. 15 shows an applied voltage in the simulation, and (b) of Fig. 15 shows transmittance, a director distribution of the liquid crystal molecules 31, and an equipotential curve achieved when a voltage of 6V is applied to each of the comb electrodes 14A and 14B in (a) of Fig. 15 in the simulation. (c) of Fig. 15 shows how a pixel is displayed in a case where power is off in the simulation and how a pixel is displayed in a case where power is on in the simulation.

### [Example 9]

SimT was obtained in a similar manner to the Example 1 except for that the thickness of the insulating layer 13 was changed from 0.1 µm to 1.0 µm (10000Å).

Table 3 collectively shows the SimT, relative permittivity ε and thickness d of the insulating layer 13, and the electrode width L/electrode spacing S of the comb electrodes 14A and 14B. Table 6 shows the electrical energy EL in addition to these values. (a) of Fig. 16 shows an applied voltage in the simulation, and (b) of Fig. 16 shows transmittance, a director distribution of the liquid crystal molecules 31, and an equipotential curve achieved when a voltage of 6V is applied to the comb electrode 14A in (a) of Fig. 16 in the simulation. (c) of Fig. 16 shows how a pixel is displayed in a case where power is off in the simulation and how a pixel is displayed in a case where power is on in the simulation.

### [Example 10]

SimT was obtained in a similar manner to the Example 9 except for that the thickness of the insulating layer 13 was changed from 1.0 µm to 1.5 µm (15000Å). In other words, SimT was obtained in a similar manner to the Example 1 except for that the thickness of the insulating layer 13 was changed from 1.0 µm to 1.5 µm (15000Å).

Table 3 collectively shows the SimT, relative permittivity ε and thickness d of the insulating layer 13, and electrode width L/electrode spacing S of the comb electrodes 14A and 14B. Table 6 shows the electrical energy EL in addition to these values. (a) of Fig. 17 shows an applied voltage in the simulation, and (b) of Fig. 17 shows transmittance, a director distribution of the liquid crystal molecules 31, and an equipotential curve achieved when a voltage of 6V is applied to the comb electrode 14A in (a) of Fig. 17 in the simulation. (c) of Fig. 17 shows how a pixel is displayed in a case where power is off in the simulation and how a pixel is displayed in a case where power is on in the simulation.

### [Example 11]

SimT was obtained in a similar manner to the Example 4 except for that the electrode width L/electrode spacing S of the comb electrodes 14A and 14B was changed from 2.6 µm/6.0 µm to 2.6µm/4.0 µm. In other words, SimT was obtained in a similar manner to the Example 1 except for that the electrode width L/electrode spacing S of the comb electrodes 14A and 14B was changed from 2.6 µm/8.0 µm to 2.6µm/4.0 µm.

Table 3 collectively shows the SimT, relative permittivity ε and thickness d of the insulating layer 13, and electrode width L/electrode spacing S of the comb electrodes 14A and 14B. Table 6 shows the electrical energy EL in addition to these values. (a) of Fig. 18 shows an applied voltage in the simulation, and (b) of Fig. 18 shows transmittance, a director distribution of the liquid crystal molecules 31, and an equipotential curve achieved when a voltage of 6V is applied to the comb electrode 14A in (a) of Fig. 18 in the simulation. (c) of Fig. 18 shows how a pixel is displayed in a case where power is off in the simulation and how a pixel is displayed in a case where power is on in the simulation.

### [Example 12]

SimT was obtained in a similar manner to the Example 8 except for that the thickness of the insulating layer 13 was changed from 1.0 µm to 0.6 µm (6000Å).

Table 3 collectively shows the SimT, relative permittivity ε and thickness d of the insulating layer 13, and electrode width L/electrode spacing S of the comb electrodes 14A and 14B. Table 7 shows the electrical energy EL in addition to these values. (a) of Fig. 19 shows an applied voltage in the simulation, and (b) of Fig. 19 shows transmittance, a director distribution of the liquid crystal molecules 31, and an equipotential curve achieved when a voltage of 6V is applied to the comb electrode 14A in (a) of Fig. 19 in the simulation. (c) of Fig. 19 shows how a pixel is displayed in a case where power is off in the simulation and how a pixel is displayed in a case where power is on in the simulation.

### [Example 13]

SimT was obtained in a similar manner to the Example 12 except for that the thickness of the insulating layer 13 was changed from 0.6 µm to 0.1 µm (1000Å). In other words, SimT was obtained in a similar manner to the Example 8 except for that the thickness of the insulating layer 13 was changed from 1.0 µm to 0.1 µm (1000Å).

Table 3 collectively shows the SimT, relative permittivity ε and thickness d of the insulating layer 13, and electrode width L/electrode spacing S of the comb electrodes 14A and 14B. Table 7 shows the electrical energy EL in addition to these values. (a) of Fig. 20 shows an applied voltage in the simulation, and (b) of Fig. 20 shows transmittance, a director distribution of the liquid crystal molecules 31, and an equipotential curve achieved when a voltage of 6V is applied to the comb electrode 14A in (a) of Fig. 19 in the simulation. (c) of Fig. 20 shows how a pixel is displayed in a case where power is off in the simulation and how a pixel is displayed in a case where power is on in the simulation.

### [Comparative Example 5]

SimT was obtained in a similar manner to the Example 9 except for that FFS driving was carried out instead of comb driving. In other words, SimT was obtained in a similar manner to the Example 2 except for that the thickness of the insulating layer 13 was changed from 0.1 µm to 1.0 µm (10000Å).

Table 5 collectively shows the SimT, relative permittivity ε and thickness d of the insulating layer 13, and electrode width L/electrode spacing S of the comb electrodes 14A and 14B. Table 8 shows the electrical energy EL in addition to these values. (a) of Fig. 22 shows an applied voltage in the simulation, and (b) of Fig. 22 shows transmittance, a director distribution of the liquid crystal molecules 31, and an equipotential curve achieved when a voltage of 6V is applied to each of the comb electrodes 14A and 14B in (a) of Fig. 22 in the simulation. (c) of Fig. 22 shows how a pixel is displayed in a case where power is off in the simulation and how a pixel is displayed in a case where power is on in the simulation.

### [Comparative Example 6]

SimT was obtained in a similar manner to the Example 10 except for that FFS driving was carried out instead of comb driving. In other words, SimT was obtained in a similar manner to the Example 2 except for that the thickness of the insulating layer 13 was changed from 0.1 µm to 1.5 µm (15000Å).

Table 5 collectively shows the SimT, relative permittivity ε and thickness d of the insulating layer 13, and electrode width L/electrode spacing S of the comb electrodes 14A and 14B. Table 8 shows the electrical energy EL in addition to these values. (a) of Fig. 23 shows an applied voltage in the simulation, and (b) of Fig. 23 shows transmittance, a director distribution of the liquid crystal molecules 31, and an equipotential curve achieved when a voltage of 6V is applied to each of the comb electrodes 14A and 14B in (a) of Fig. 23 in the simulation. (c) of Fig. 23 shows how a pixel is displayed in a case where power is off in the simulation and how a pixel is displayed in a case where power is on in the simulation.

### [Comparative Example 7]

SimT was obtained in a similar manner to the Example 11 except for that FFS driving was carried out instead of comb driving. In other words, SimT was obtained in a similar manner to the Example 2 except for that the electrode width L/electrode spacing S of the comb electrodes 14A and 14B was changed from 2.6 µm/8.0 µm to 2.6µm/4.0 µm.

Table 5 collectively shows the SimT, relative permittivity ε and thickness d of the insulating layer 13, and electrode width L/electrode spacing S of the comb electrodes 14A and 14B. Table 8 shows the electrical energy EL in addition to these values. (a) of Fig. 24 shows an applied voltage in the simulation, and (b) of Fig. 24 shows transmittance, a director distribution of the liquid crystal molecules 31, and an equipotential curve achieved when a voltage of 6V is applied to each of the comb electrodes 14A and 14B in (a) of Fig. 24 in the simulation. (c) of Fig. 24 shows how a pixel is displayed in a case where power is off in the simulation and how a pixel is displayed in a case where power is on in the simulation.

### [Example 14]

SimT was obtained in a similar manner to the Example 13 except for that FFS driving was carried out instead of comb driving.

Table 3 collectively shows the SimT, relative permittivity ε and thickness d of the insulating layer 13, and the electrode width L/electrode spacing S of the comb electrodes 14A and 14B. Table 9 shows the electrical energy EL in addition to these values. (a) of Fig. 21 shows an applied voltage in the simulation, and (b) of Fig. 21 shows transmittance, a director distribution of the liquid crystal molecules 31, and an equipotential curve achieved when a voltage of 6V is applied to each of the comb electrodes 14A and 14B in (a) of Fig. 21 in the simulation. (c) of Fig. 21 shows how a pixel is displayed in a case where power is off in the simulation and how a pixel is displayed in a case where power is on in the simulation.

### [Comparative Example 8]

SimT was obtained in a similar manner to the Example 12 except for that FFS driving was carried out instead of comb driving. In other words, SimT was obtained in a similar manner to the Example 14 except for that the thickness of the insulating layer 13 was changed from 0.1 µm to 0.6 µm (6000Å).

Table 5 collectively shows the SimT, relative permittivity ε and thickness d of the insulating layer 13, and electrode width L/electrode spacing S of the comb electrodes 14A and 14B. Table 9 shows the electrical energy EL in addition to these values. (a) of Fig. 25 shows an applied voltage in the simulation, and (b) of Fig. 25 shows transmittance, a director distribution of the liquid crystal molecules 31, and an equipotential curve achieved when a voltage of 6V is applied to each of the comb electrodes 14A and 14B in (a) of Fig. 25 in the simulation. (c) of Fig. 25 shows how a pixel is displayed in a case where power is off in the simulation and how a pixel is displayed in a case where power is on in the simulation.

### [Example 15]

SimT was obtained in a similar manner to the Example 10 except for that the thickness of the insulating layer 13 was changed from 1.5 µm to 1.8 µm (18000Å). In other words, SimT was obtained in a similar manner to the Example 1 except for that the thickness of the insulating layer 13 was changed from 0.1 µm to 1.8 µm (18000Å).

Table 3 collectively shows the SimT, relative permittivity ε and thickness d of the insulating layer 13, and electrode width L/electrode spacing S of the comb electrodes 14A and 14B. Table 6 shows the electrical energy EL in addition to these values. (a) of Fig. 26 shows an applied voltage in the simulation, and (b) of Fig. 26 shows transmittance, a director distribution of the liquid crystal molecules 31, and an equipotential curve achieved when a voltage of 6V is applied to the comb electrode 14A in (a) of Fig. 26 in the simulation. (c) of Fig. 26 shows how a pixel is displayed in a case where power is off in the simulation and how a pixel is displayed in a case where power is on in the simulation.

### [Comparative Example 9]

SimT was obtained in a similar manner to the Example 15 except for that the thickness of the insulating layer 13 was changed from 1.8 µm to 2.0 µm (20000Å). In other words, SimT was obtained in a similar manner to the Example 1 except for that the thickness of the insulating layer 13 was changed from 0.1 µm to 2.0 pm (20000Å).

Table 5 collectively shows the SimT, relative permittivity ε and thickness d of the insulating layer 13, and electrode width L/electrode spacing S of the comb electrodes 14A and 14B. Table 6 shows the electrical energy EL in addition to these values. (a) of Fig. 27 shows an applied voltage in the simulation, and (b) of Fig. 27 shows transmittance, a director distribution of the liquid crystal molecules 31, and an equipotential curve achieved when a voltage of 6V is applied to the comb electrode 14A in (a) of Fig. 27 in the simulation. (c) of Fig. 27 shows how a pixel is displayed in a case where power is off in the simulation and how a pixel is displayed in a case where power is on in the simulation.

### [Example 16]

SimT was obtained in a similar manner to the Example 1 except for that the electrode width L/electrode spacing S of the comb electrodes 14A and 14B was changed from 2.6 µm/8.0 µm to 2.6µm/12.0 µm.

Table 4 collectively shows the SimT, relative permittivity ε and thickness d of the insulating layer 13, and electrode width L/electrode spacing S of the comb electrodes 14A and 14B. Table 6 shows the electrical energy EL in addition to these values. (a) of Fig. 28 shows an applied voltage in the simulation, and (b) of Fig. 28 shows transmittance, a director distribution of the liquid crystal molecules 31, and an equipotential curve achieved when a voltage of 6V is applied to the comb electrode 14A in (a) of Fig. 28 in the simulation. (c) of Fig. 28 shows how a pixel is displayed in a case where power is off in the simulation and how a pixel is displayed in a case where power is on in the simulation.

### [Example 17]

SimT was obtained in a similar manner to the Example 3 except for that the electrode width L/electrode spacing S of the comb electrodes 14A and 14B was changed from 2.6 µm/8.0 µm to 2.6µm/12.0 µm.

Table 4 collectively shows the SimT, relative permittivity s and thickness d of the insulating layer 13, and electrode width L/electrode spacing S of the comb electrodes 14A and 14B. Table 8 shows the electrical energy EL in addition to these values. (a) of Fig. 29 shows an applied voltage in the simulation, and (b) of Fig. 29 shows transmittance, a director distribution of the liquid crystal molecules 31, and an equipotential curve achieved when a voltage of 6V is applied to each of the comb electrodes 14A and 14B in (a) of Fig. 29 in the simulation. (c) of Fig. 29 shows how a pixel is displayed in a case where power is off in the simulation and how a pixel is displayed in a case where power is on in the simulation.

### [Example 18]

SimT was obtained in a similar manner to the Example 17 except for that the electrode width L/ electrode spacing S of the comb electrodes 14A and 14B was changed from 2.6 µm/12.0 µm to 2.6µm/14.0 µm.

Table 4 collectively shows the SimT, relative permittivity s and thickness d of the insulating layer 13, and electrode width L/electrode spacing S of the comb electrodes 14A and 14B. Table 8 shows the electrical energy EL in addition to these values. (a) of Fig. 30 shows an applied voltage in the simulation, and (b) of Fig. 30 shows transmittance, a director distribution of the liquid crystal molecules 31, and an equipotential curve achieved when a voltage of 6V is applied to each of the comb electrodes 14A and 14B in (a) of Fig. 30 in the simulation. (c) of Fig. 30 shows how a pixel is displayed in a case where power is off in the simulation and how a pixel is displayed in a case where power is on in the simulation.

### [Example 19]

SimT was obtained in a similar manner to the Example 18 except for that the electrode width L/electrode spacing S of the comb electrodes 14A and 14B was changed from 2.6 µm/14.0 µm to 2.6µm/16.0 µm.

Table 4 collectively shows the SimT, relative permittivity s and thickness d of the insulating layer 13, and electrode width L/electrode spacing S of the comb electrodes 14A and 14B. Table 8 shows the electrical energy EL in addition to these values. (a) of Fig. 31 shows an applied voltage in the simulation, and (b) of Fig. 31 shows transmittance, a director distribution of the liquid crystal molecules 31, and an equipotential curve achieved when a voltage of 6V is applied to each of the comb electrodes 14A and 14B in (a) of Fig. 31 in the simulation. (c) of Fig. 31 shows how a pixel is displayed in a case where power is off in the simulation and how a pixel is displayed in a case where power is on in the simulation.

### [Example 20]

SimT was obtained in a similar manner to the Example 4 except for that the electrode width L/electrode spacing S of the comb electrodes 14A and 14B was changed from 2.6 µm/6.0 µm to 2.6µm/2.0 µm. In other words, SimT was obtained in a similar manner to the Example 1 except for that the electrode width L/electrode spacing S of the comb electrodes 14A and 14B was changed from 2.6 µm/8.0 µm to 2.6µm/2.0 µm.

Table 4 collectively shows the SimT, relative permittivity ε and thickness d of the insulating layer 13, and electrode width L/electrode spacing S of the comb electrodes 14A and 14B. Table 6 shows the electrical energy EL in addition to these values. (a) of Fig. 32 shows an applied voltage in the simulation, and (b) of Fig. 32 shows transmittance, a director distribution of the liquid crystal molecules 31, and an equipotential curve achieved when a voltage of 6V is applied to the comb electrode 14A in (a) of Fig. 32 in the simulation. (c) of Fig. 32 shows how a pixel is displayed in a case where power is off in the simulation and how a pixel is displayed in a case where power is on in the simulation.

**Table 1**

| | | Example 1 | Example 2 | Example 3 | Example 4 | Example 5 | Example 6 | Example 7 | Example 8 |
|---|---|---|---|---|---|---|---|---|---|
| L/S | | 2.6/8.0 | 2.6/8.0 | 2.6/8.0 | 2.6/6.0 | 2.6/6.0 | 2.6/6.0 | 2.6/6.0 | 2.6/8.0 |
| Relative permittivity ε | | 6.9 | 6.9 | 6.9 | 6.9 | 6.9 | 3.3 | 6.9 | 3.3 |
| Thickness d | | 0.1 | 0.1 | 0.3 | 0.1 | 0.1 | 3.2 | 0.3 | 1.0 |
| Driving method | | Comb driving | FFS driving | FFS driving | Comb driving | FFS driving | Comb driving | FFS driving | Comb driving |
| | OV | 0.0% | 0.0% | 0.0% | 0.0% | 0.0% | 0.0% | 0.0% | 0.0% |
| | 0.5V | 0.0% | 0.0% | 0.0% | 0.0% | 0.0% | 0.0% | 0.0% | 0.0% |
| | 1V | 0.0% | 0.0% | 0.0% | 0.0% | 0.0% | 0.0% | 0.0% | 0.0% |
| | 1.5V | 0.1% | 0.2% | 0.2% | 0.2% | 0.2% | 0.0% | 0.1% | 0.0% |
| | 2V | 1.9% | 13.3% | 1.1% | 0.9% | 1.7% | 0.1% | 0.8% | 0.2% |
| Voltage V | 2.5V | 7.5% | 17.8% | 7.7% | 5.9% | 3.8% | 2.8% | 2.8% | 1.3% |
| - | 3V | 9.5% | 20.0% | 12.5% | 10.0% | 12.1% | 11.4% | 6.2% | 5.0% |
| transmittance % | 3.5V | 11.4% | 21.5% | 15.6% | 12.2% | 14.8% | 16.1% | 7.8% | 10.9% |
| | 4V | 12.1% | 22.5% | 16.3% | 13.5% | 18.0% | 19.1% | 9.3% | 17,5% |
| | 4.5V | 12.9% | 23.0% | 16.9% | 14.3% | 20.0% | 21.0% | 10.5% | 20.6% |
| | 5V | 14.2% | 23.3% | 17.9% | 15.5% | 21.2% | 22.2% | 11.6% | 22.4% |
| | 5.5V | 15.8% | 23.7% | 18.3% | 16.2% | 22.0% | 22.9% | 12.5% | 23.6% |
| | 6V | 16.2% | 23.8% | 18.6% | 16.7% | 22.5% | 23.3% | 13.3% | 24.4% |

**Table 2**

| | | Comparative Example 1 | Comparative Example 2 | Comparative Example 3 | Comparative Example 4 |
|---|---|---|---|---|---|
| L/S | | 2.6/8.0 | 2.6/8.0 | 2.6/8.0 | 2.6/8.0 |
| Relative permittivity ε | | Nothing | 3.3 | 3.3 | 3.3 |
| Thickness d | | Nothing | 3.2 | 3.2 | 1.0 |
| Driving method | | Comb driving | FFS driving | Comb driving | FFS driving |
| | 0V | 0.0% | 0.0% | 0.0% | 0.0% |
| | 0.5V | 0.0% | 0.0% | 0.0% | 0.0% |
| | 1V | 0.0% | 0.0% | 0.0% | 0.0% |
| | 1.5V | 0.0% | 0.0% | 0.0% | 0.0% |
| | 2V | 0.0% | 0.0% | 0.0% | 0.0% |
| Voltage V | 2.5V | 0.0% | 0.0% | 0.1% | 0.2% |
| - | 3V | 4.5% | 0.0% | 1.9% | 0.8% |
| Transmittance % | 3.5v | 16.1% | 0.0% | 15.6% | 1.8% |
| | 4V | 20.0% | 0.0% | 19.7% | 3.1% |
| | 4.5V | 22.3% | 0.0% | 22.1% | 4.4% |
| | 5V | 23.7% | 0.0% | 23.5% | 5.7% |
| | 5.5V | 24.4% | 0.0% | 24.3% | 7.3% |
| | 6V | 24.8% | 0.1% | 24.7% | 8.5% |

**Table 3**

| | | Example 9 | Example 10 | Example 11 | Example 12 | Example 13 | Example 14 | Example 15 |
|---|---|---|---|---|---|---|---|---|
| L/S | | 2.6/8.0 | 2.6/8.0 | 2.6/4.0 | 2.6/8.0 | 2.6/8.0 | 2.6/8.0 | 2.6/8.0 |
| Relative permittivity ε | | 6.9 | 6.9 | 6.9 | 3.3 | 3.3 | 3.3 | 6.9 |
| Thickness d | | 1.0 | 1.5 | 0.1 | 0.6 | 0.1 | 0.1 | 1.8 |
| Driving method | | Comb driving | Comb driving | Comb driving | Comb driving | Comb driving | FFS driving | Comb driving |
| | 0.0V | 0.0% | 0.0% | 0.0% | 0.0% | 0.0% | 0.0% | 0.0% |
| | 0.5V | 0.0% | 0.0% | 0.0% | 0.0% | 0.0% | 0.0% | 0.0% |
| | 1.0V | 0.0% | 0.0% | 0.0% | 0.0% | 0.0% | 0.0% | 0.0% |
| | 1.5V | 0.0% | 0.0% | 0.2% | 0.0% | 0.1% | 0.2% | 0.0% |
| | 2.0V | 0.4% | 0.2% | 7.2% | 0.3% | 1.0% | 1.5% | 0.1% |
| Voltage V | 2.5V | 2.1% | 1.6% | 14.4% | 1.8% | 10.1% | 15.8% | 1.4% |
| - | 3.0V | 5.2% | 4.8% | 16.5% | 4.9% | 13.5% | 19.4% | 5.0% |
| Transmittance % | 3.5V | 8.7% | 9.2% | 18.3% | 8.7% | 15.4% | 21.3% | 11.4% |
| | 4.0V | 19.5% | 13.7% | 20.7% | 19.7% | 17.2% | 22.0% | 17.4% |
| | 4.5V | 22.3% | 16.5% | 21.7% | 21.2% | 18.5% | 22.9% | 20.5% |
| | 5.0V | 23.5% | 22.1% | 22.3% | 22.0% | 19.5% | 23.2% | 22.2% |
| | 5.5V | 24.2% | 24.7% | 22.5% | 24.3% | 20.1% | 23.5% | 23.3% |
| | 6.0V | 24.6% | 24.8% | 23.2% | 24.8% | 20.4% | 23.8% | 24.1% |

**Table 4**

| | | Example 16 | Example 17 | Example 18 | Example 19 | Example 20 |
|---|---|---|---|---|---|---|
| L/S | | 2.6/12.0 | 2.6/12.0 | 2.6/14.0 | 2.6/16.0 | 2.6/2.0 |
| Relative permittivity ε | | 6.9 | 6.9 | 6.9 | 6.9 | 6.9 |
| Thickness d | | 0.1 | 0.3 | 0.3 | 0.3 | 0.1 |
| Driving method | | Comb driving | FFS driving | FFS driving | FFS driving | Comb driving |
| | 0.0V | 0.0% | 0.0% | 0.0% | 0.0% | 0.0% |
| | 0.5V | 0.0% | 0.0% | 0.0% | 0.0% | 0.0% |
| | 1.0V | 0.0% | 0.0% | 0.0% | 0.0% | 0.0% |
| | 1.5V | 0.0% | 0.1% | 0.1% | 0.1% | 0.3% |
| | 2.0V | 0.1% | 0.9% | 1.0% | 0.7% | 1.2% |
| Voltage V | 2.5V | 0.3% | 3.0% | 3.0% | 2.3% | 3.3% |
| - | 3.0V | 4.6% | 6.1% | 5.3% | 4.8% | 5.2% |
| Transmittance % | 3.5V | 9.1% | 9.2% | 7.9% | 7.6% | 7.1% |
| | 4.0V | 9.9% | 11.7% | 10.3% | 10.2% | 8.9% |
| | 4.5V | 10.5% | 13.7% | 12.5% | 12.3% | 10.5% |
| | 5.0V | 11.8% | 15.2% | 14.2% | 13.9% | 11.8% |
| | 5.5V | 12.8% | 16.4% | 15.6% | 15.1% | 13.0% |
| | 6.0V | 14.1% | 16.9% | 16.8% | 16.1% | 14.0% |

**Table 5**

| | | Comparative Example 5 | Comparative Example 6 | Comparative Example 7 | Comparative Example 8 | Comparative Example 9 |
|---|---|---|---|---|---|---|
| L/S | | 2.6/8.0 | 2.6/8.0 | 2.6/4.0 | 2.6/8.0 | 2.6/8.0 |
| Relative permittivity ε | | 6.9 | 6.9 | 6.9 | 3.3 | 6.9 |
| Thickness d | | 1.0 | 1.5 | 0.1 | 0.6 | 2.0 |
| Driving method | | FFS driving | FFS driving | FFS driving | FFS driving | Comb driving |
| | 0.0V | 0.0% | 0.0% | 0.0% | 0.0% | 0.0% |
| | 0.5V | 0.0% | 0.0% | 0.0% | 0.0% | 0.0% |
| | 1.0V | 0.0% | 0.0% | 0.0% | 0.0% | 0.0% |
| | 1.5V | 0.0% | 0.0% | 0.1% | 0.0% | 0.0% |
| | 2.0V | 0.3% | 0.1% | 0.8% | 0.2% | 0.1% |
| Voltage V | 2.5V | 1.1% | 0.5% | 1.2% | 0.8% | 1.2% |
| - | 3.0V | 2.6% | 1.3% | 11.5% | 2.1% | 4.8% |
| Transmittance % | 3.5V | 4.7% | 2.5% | 12.5% | 3.7% | 12.0% |
| | 4.0V | 7.0% | 4.1% | 13.2% | 5.8% | 18.0% |
| | 4.5V | 20.0% | 5.8% | 13.8% | 19.0% | 20.9% |
| | 5.0V | 21.1% | 7.6% | 14.4% | 20.6% | 22.5% |
| | 5.5V | 21.6% | 20.1% | 14.8% | 21.2% | 24.6% |
| | 6.0V | 22.6% | 21.0% | 15.3% | 21.7% | 24.8% |

**Table 6**

| | | Comparative Example 1 | Example 16 | Example 1 | Example 9 | Example 10 | Example 15 | Comparative Example 9 | Example 4 | Example 11 | Example 20 |
|---|---|---|---|---|---|---|---|---|---|---|---|
| L/S | | 2.6/8.0 | 2.6/12.0 | 2.6/8.0 | 2.6/8.0 | 2.6/8.0 | 2.6/8.0 | 2.6/8.0 | 2.6/6.0 | 2.6/4.0 | 2.6/2.0 |
| Relative permittivity ε | | Nothing | 6.9 | 6.9 | 6.9 | 6.9 | 6.9 | 6.9 | 6.9 | 6.9 | 6.9 |
| Thickness d | | Nothing | 0.1 | 0.1 | 1.0 | 1.5 | 1.8 | 2.0 | 0.1 | 0.1 | 0.1 |
| Driving method | | Comb driving | Comb driving | Comb driving | Comb driving | Comb driving | Comb driving | Comb driving | Comb driving | Comb driving | Comb driving |
| | 2.0V | 0.0% | 0.1% | 1.9% | 0.4% | 0.2% | 0.1% | 0.1% | 0.9% | 7.2% | 1.2% |
| | 2.5V | 0.0% | 0.3% | 7.5% | 2.1% | 1.6% | 1.4% | 1.2% | 5.9% | 14.4% | 3.3% |
| SimT | 3.5V | 16.1% | 9.1% | 11.4% | 8.7% | 9.2% | 11.4% | 12.0% | 12.2% | 18.3% | 7.1% |
| | 4.5V | 22.3% | 10.5% | 12.9% | 22.3% | 16.5% | 20.5% | 20.9% | 14.3% | 21.7% | 10.5% |
| | 5.5V | 24.4% | 12.8% | 15.8% | 24.2% | 24.7% | 23.3% | 24.6% | 16.2% | 22.5% | 13.0% |
| Electrical energy EL (J/m³) | | 0.29 | 0.48 | 0.62 | 0.59 | 0.48 | 0.44 | 0.34 | 0.63 | 0.69 | 0.74 |
| | 2.0V | - | - | 0.4% | - | - | - | - | - | - | - |
| Actual | 2.5V | - | - | 1.3% | - | - | - | - | - | - | - |
| measurement | 3.5V | - | - | 4.4% | - | - | - | - | - | - | - |
| T | 4.5V | - | - | 8.0% | - | - | - | - | - | - | - |
| | 5.5V | - | - | 11.8% | - | - | - | - | - | - | - |

**Table 7**

| | | Example 13 | Example 12 | Example 8 | Comparative Example 3 | Example 6 |
|---|---|---|---|---|---|---|
| L/S | | 2.6/8.0 | 2.6/8.0 | 2.6/8.0 | 2.6/8.0 | 2.6/6.0 |
| Relative permittivity ε | | 3.3 | 3.3 | 3.3 | 3.3 | 3.3 |
| Thickness d | | 0.1 | 0.6 | 1.0 | 3.2 | 3.2 |
| Driving method | | Comb driving | Comb driving | Comb driving | Comb driving | Comb driving |
| | 2.0V | 1.0% | 0.3% | 0.2% | 0.0% | 0.1% |
| | 2.5V | 10.1% | 1.8% | 1.3% | 0.1% | 2.8% |
| SimT | 3.5V | 15.4% | 8.7% | 10.9% | 15.6% | 16.1% |
| | 4.5V | 18.5% | 21.2% | 20.6% | 22.1% | 21.0% |
| | 5.5V | 20.1% | 24.3% | 23.6% | 24.3% | 22.9% |
| Electrical energy EL (J/m³) | | 0.85 | 0.77 | 0.67 | 0.37 | 0.49 |
| | 2.0V | - | - | - | 0.0% | - |
| Actual | 2.5V | - | - | - | 0.0% | - |
| measurement | 3.5V | - | - | - | 12.8% | - |
| T | 4.5V | - | - | - | 17.0% | - |
| | 5.5V | - | - | - | 19.5% | - |

**Table 8**

| | | Example 19 | Example 18 | Example 17 | Example 2 | Example 3 | Comparative Example 5 | Comparative Example 6 | Example 5 | Example 7 | Comparative Example 7 |
|---|---|---|---|---|---|---|---|---|---|---|---|
| L/S | | 2.6/16.0 | 2.6/14.0 | 2.6/12.0 | 2.6/8.0 | 2.6/8.0 | 2.6/8.0 | 2.6/8.0 | 2.6/6.0 | 2.6/6.0 | 2.6/4.0 |
| Relative permittivity ε | | 6.9 | 6.9 | 6.9 | 6.9 | 6.9 | 6.9 | 6.9 | 6.9 | 6.9 | 6.9 |
| Thickness d | | 0.3 | 0.3 | 0.3 | 0.1 | 0.3 | 1.0 | 1.5 | 0.1 | 0.3 | 0.1 |
| Driving method | | FFS driving | FFS driving | FFS driving | FFS driving | FFS driving | FFS driving | FFS driving | FFS driving | FFS driving | FFS driving |
| | 2.0V | 0.7% | 1.0% | 0.9% | 13.3% | 1.1% | 0.3% | 0.1% | 1.7% | 0.8% | 0.8% |
| | 2.5V | 2.3% | 3.0% | 3.0% | 17.8% | 7.7% | 1.1% | 0.5% | 3.8% | 2.8% | 1.2% |
| SimT | 3.5V | 7.6% | 7.9% | 9.2% | 21.5% | 15.6% | 4.7% | 2.5% | 14.8% | 7.8% | 12.5% |
| | 4.5V | 12.3% | 12.5% | 13.7% | 23.0% | 16.9% | 20.0% | 5.8% | 20.0% | 10.5% | 13.8% |
| | 5.5V | 15.1% | 15.6% | 16.4% | 23.7% | 18.3% | 21.6% | 20.1% | 22.0% | 12.5% | 14.8% |
| Electrical energy EL (j/m³) | | 0.49 | 0.58 | 0.56 | 0.61 | 0.51 | 0.40 | 0.30 | 0.49 | 0.44 | 0.42 |
| | 2.0V | - | - | - | 1.1% | - | - | - | - | - | - |
| Actual | 2.5V | - | - | - | 3.1% | - | - | - | - | - | - |
| measurement | 3.5V | - | - | - | 7.8% | - | - | - | - | - | - |
| T | 4.5V | - | - | - | 12.9% | - | - | - | - | - | - |
| | 5.5V | - | - | - | 19.6% | - | - | - | - | - | - |

**Table 9**

| | | Example 14 | Comparative Example 8 | Comparative Example 4 | Comparative Example 2 |
|---|---|---|---|---|---|
| L/S | | 2.6/8.0 | 2.6/8.0 | 2.6/8.0 | 2.6/8.0 |
| Relative permittivity ε | | 3.3 | 3.3 | 3.3 | 3.3 |
| Thickness d | | 0.1 | 0.6 | 1.0 | 3.2 |
| Driving method | | FFS driving | FFS driving | FFS driving | FFS driving |
| | 2.0V | 1.5% | 0.2% | 0.0% | 0.0% |
| | 2.5V | 15.8% | 0.8% | 0.2% | 0.0% |
| SimT | 3.5V | 21.3% | 3.7% | 1.8% | 0.0% |
| | 4.5V | 22.9% | 19.0% | 4.4% | 0.0% |
| | 5.5V | 23.5% | 21.2% | 7.3% | 0.0% |
| Electrical energy EL (J/m³) | | 0.64 | 0.35 | 0.34 | 0.33 |
| | 2.0V | - | - | - | 0.0% |
| Actual | 2.5V | - | - | - | 0.0% |
| measurement | 3.5V | - | - | - | 0.0% |
| T | 4.5V | - | - | - | 0.0% |
| | 5.5V | - | - | - | 0.0% |

As is clear from Tables 2 and 6, in a case where a liquid crystal panel which does not have an FFS structure (e.g., the liquid crystal panel 102 of the Comparative Example 1) is comb-driven, a rising voltage of liquid crystal molecules is not less than 2.5V.

The following discusses a driving voltage reduction effect on the basis of this rising voltage. As shown in Table 9, in a case where an insulating layer 13 made of an organic material such as an acrylic resin, i.e., an insulating layer 13 having a low relative permittivity ε of 3.3 for example is used, a driving voltage reduction effect cannot be observed under the conditions that (i) the electrode width L/electrode spacing S of the comb electrodes 14A and 14B is 2.6/8.0, (ii) a thickness d of the insulating layer 13 is not less than 0.6 µm for example, and (iii) the liquid crystal panel 2 is FFS driven. However, even in a case where such an organic insulating layer 13 having a low relative permittivity ε of 3.3 for example is used, a driving voltage reduction effect can be observed and transmittance increases under the condition that the insulating layer has a small thickness d of 0.1 µm for example.

As shown in Table 8, in a case where an inorganic insulating layer 13 having a high relative permittivity ε of 6.9 for example is used, a driving voltage reduction effect cannot be observed under the conditions that (i) the electrode width L/electrode spacing S of the comb electrodes 14A and 14B is 2.6/8.0, (ii) a thickness d of the insulating layer 13 is not less than 1.0 µm for example, and (iii) the liquid crystal panel 2 is FFS driven. However, even in a case where such an inorganic insulating layer 13 having a high relative permittivity ε of 6.9 for example is used, a driving voltage reduction effect can be observed and transmittance increases under the condition that the insulating layer has a small thickness d of not more than 0.3 µm for example.

As described above, in a case where FFS driving is carried out, a smaller thickness d of the insulating layer 13 produces a higher driving voltage reduction effect and higher transmittance regardless of the relative permittivity ε although a suitable thickness d of the insulating layer 13 varies depending on the relative permittivity ε.

Further, as shown in Tables 6 and 7, also in a case where the liquid crystal panel 2 is comb-driven, a smaller thickness d of the insulating layer 13 produces a higher driving voltage reduction effect and higher transmittance regardless of the relative permittivity ε.

However, in a case where the liquid crystal panel 2 is comb-driven and where an organic insulating layer 13 having a low relative permittivity ε of 3.3 for example is used, a driving voltage reduction effect cannot be observed under the conditions that (i) the electrode width L/electrode spacing S of the comb electrodes 14A and 14B is 2.6/8.0 and (ii) the insulating layer 13 has a large thickness d of 3.2 µm for example (see Table 7). In such a case where the insulating layer 13 has a low relative permittivity ε of 3.3 and the electrode width L/electrode spacing S of the comb electrodes 14A and 14B is 2.6/8.0, a driving voltage reduction effect can be observed and transmittance increases under the condition that the thickness d of the insulating layer 13 is not more than 1.0 µm for example.

Meanwhile, in a case where the liquid crystal panel 2 is comb-driven and where an inorganic insulating layer 13 having a high relative permittivity ε of 6.9 for example is used, a driving voltage reduction effect cannot be observed under the conditions that (i) the electrode width L/electrode spacing S of the comb electrodes 14A and 14B is 2.6/8.0 and (ii) the insulating layer 13 has a large thickness d of 2.0 µm for example (see Table 6). However, in a case where the inorganic insulating layer 13 having a high relative permittivity ε of 6.9 is used, a driving voltage reduction effect could be observed in all of the Examples as a result of comb driving of the liquid crystal panel 2 under the condition that the insulating layer 13 has a thickness d of not more than 1.8 µm, regardless of the thickness d of the insulating layer 13 and the electrode width L/electrode spacing S of the comb electrodes 14A and 14B.

Further, in a case where the liquid crystal panel 2 is comb-driven and in a case where an organic insulating layer 13 having a low relative permittivity ε of 3.3 for example and having a thickness of 3.2 µm is used as described above, a driving voltage reduction effect can be observed and transmittance increases in a case where the electrode spacing S is made smaller, as is clear from a comparison between the Example 6 and the Comparative Example 3.

Note that in a case where the liquid crystal panel 2 is comb-driven and in a case where an insulating layer 13 having a high relative permittivity ε of 6.9 for example is used, a smaller electrode spacing S produces a higher effect regardless of the thickness d of the insulating layer 13, as is clear from comparisons among the Examples 1, 4, 11, 16 and 20 shown in Table 6 and a comparison between the Example 6 and the Comparative Example 3 shown in Table 7.

In contrast to the case where comb driving is carried out, in a case where FFS driving is carried out and where the insulating layer 13 has a thickness d of 0.1 µm, a smaller electrode spacing S produces a smaller driving voltage reduction effect and lower transmittance, as is clear from comparisons among the Example 2, the Example 5, and the Comparative Example 7 shown in Table 8. However, in a case where FFS driving is carried out and where the insulating layer 13 has a thickness d of 0.3 µm, tendency of a driving voltage reduction effect and transmittance varies depending on whether the electrode spacing S is not more than 12.0 µm or not less than 12.0 µm, as is clear from comparisons among the Examples 3, 7, and 17-19 shown in Table 8. Specifically, in a case where the electrode spacing S is not more than 12.0 µm, a smaller electrode spacing S tends to produce a smaller driving voltage reduction effect and lower transmittance. Meanwhile, in a case where the electrode spacing S is not less than 12.0 µm, a larger electrode spacing S tends to produce a smaller driving voltage reduction effect and lower transmittance.

It can be hypothesized that the reason why a higher effect can be obtained as the electrode spacing S becomes smaller is that since, in comb driving, an electric field is applied in parallel in a lateral direction, the electric field intensity increases as the electrode spacing S becomes smaller.

With the use of the electrical energy EL, reasons for these phenomena can be explained. Specifically, it was confirmed that the smaller the thickness d of the insulating layer 13 becomes, the higher the electrical energy EL becomes and the more actively liquid crystal molecules move regardless of a relative permittivity ε and a driving method although a suitable thickness d of the insulating layer 13 varies depending on the relative permittivity ε as described above.

Further, in comb driving, the electrical energy increases on the whole as the electrode spacing S becomes smaller, as shown in Tables 6 and 7. In contrast, in FFS driving, the electrical energy EL becomes smaller as the electrode spacing S becomes smaller, as shown in Table 8.

The results shown in Tables 6 through 8 revealed that a driving voltage reduction effect can be observed in an arrangement in which the electrical energy EL is not less than 0.44J/m³, regardless of whether comb driving is carried out or FFS driving is carried out. Further, in a case where FFS driving was carried out, a remarkable effect could be attained in driving voltage reduction and transmittance improvement in a case where the electrical energy EL was not less than 0.6J/m³.

Each of the liquid crystal panels 2 and 102 used in the Examples and the Comparative Examples is a vertical alignment lateral electric field mode liquid crystal panel in which driving with the use of a lateral electric field is carried out in a vertical alignment mode. As such, the liquid crystal molecules 31 in the liquid crystal panel 2 and the liquid crystal molecules 131 in the liquid crystal panel 102 are aligned vertically with respect to a substrate surface and each pixel becomes dark as shown in (c) of Figs. 4 through 32 when the power is off (i.e., in a case where no electric field is generated between the comb electrodes 14A and 14B, between the upper electrode (the comb electrodes 14A and 14B) and the lower electrode 12 and between the comb electrodes 112 and 113).

Meanwhile, when the power is on (i.e., in a case where driving is carried out with the use of a lateral electric field generated between the electrodes), the liquid crystal molecules 31 are aligned symmetrically with respect to a line that is halfway between the comb electrodes 14A and 14B and the liquid crystal molecules 131 are aligned symmetrically with respect to a line that is halfway between the comb electrodes 112 and 113, and each pixel becomes bright as shown in (c) of Figs. 4 through 32.

Note that in (c) of Figs. 4 through 32, "H" indicates an alignment space in which the liquid crystal molecules 31 or the liquid crystal molecules 131 operate when the power is on, and "T" indicates disclination (border at which alignment disorder occurs) between the comb electrodes 14A and 14B or between the comb electrodes 14A and 14B. Note that transmittance varies depending on how large the alignment space is, and is affected by the disclination.

The results shown in (c) of Figs. 4 through 32 show that in a case where an identical driving method is used, occurrence of the disclination can be suppressed more effectively in the Examples as compared to the Comparative Examples. Especially in a case where comb driving is carried out, no disclination occurs between the comb electrodes 14A and 14B in the Examples 1, 4, 9, 10, 11-13, and 17, so that a liquid crystal panel 2 that is bright and good in display quality can be realized.

Next, the following describes a suitable thickness d of the insulating layer 13 and a suitable electrode spacing S in each driving method which were examined in view of the electrical energy EL.

### [Thickness d of the insulating layer 13 in a case where FFS driving is used]

Fig. 33 shows a relationship between the electrical energy EL and the thickness d of the insulating layer 13 in each of the Examples 2, 3, and 14 and the Comparative Examples 2, 4, 5, 6, and 8 in which FFS driving was used.

As shown in Fig. 33, in a case where FFS driving is used, the electrical energy EL becomes larger as the thickness d becomes smaller, regardless of the relative permittivity ε.

The result shown in Fig. 33 reveals that in a case where an organic insulating layer 13 having a low relative permittivity ε of 3.3 for example is used, it is preferable that the thickness d of the insulating layer 13 is not more than 0.35 µm which allows the electrical energy to be not less than 0.44J/m³. Further, the result shown in Fig. 33 reveals that in a case where an inorganic insulating layer 13 having a high relative permittivity ε of 6.9 for example is used, it is preferable that the thickness d of the insulating layer 13 is not more than 0.65 µm which allows the electrical energy to be not less than 0.44J/m³.

Note that the result shown in Fig. 33 shows that an upper limit of the thickness d of the insulating layer 13 falls in a range from 0.35 to 0.65 in a case where the relative permittivity ε of the insulating layer 13 is in a range from 3.3 to 6.9.

It is preferable, from the viewpoint of an insulation property, that a lower limit of the thickness d of the insulating layer 13 is 0.1 µm. As long as the thickness d of the insulating layer 13 is not less than 0.1 µm, it is possible to prevent occurrence of insulation failure due to lattice defects.

Further, as shown in Fig. 33, in a case where the electrode spacing S is 8.0 µm, an electrical energy EL of not less than 0.60J/m³ can be obtained regardless of the relative permittivity ε, as long as the thickness d of the insulating layer 13 is 0.1 µm.

### [Thickness d of the insulating layer 13 in a case where comb driving is used]

Fig. 34 shows a relationship between the electrical energy EL and the thickness d of the insulating layer 13 in each of the Examples 1, 8, 9, 10, 12, 13, and 15 and the Comparative Examples 1, 3, and 9 in which comb driving was used.

As shown in Fig. 34, also in a case where comb driving is used, the electrical energy EL becomes larger as the thickness d becomes smaller, regardless of the relative permittivity ε.

The result shown in Fig. 34 reveals that in a case where an organic insulating layer 13 having a low relative permittivity ε of 3.3 for example is used, it is preferable that the thickness d of the insulating layer 13 is not more than 2.8 µm which allows the electrical energy to be not less than 0.44J/m³. Further, the result shown in Fig. 33 reveals that in a case where an inorganic insulating layer 13 having a high relative permittivity ε of 6.9 for example is used, it is preferable that the thickness d of the insulating layer 13 is not more than 1.8 µm which allows the electrical energy to be not less than 0.44J/m³.

Also in a case where an inorganic insulating layer 13 is used as above, it is preferable, from viewpoint of prevention of insulation failure due to lattice defects and uneven film thickness, that the thickness d of the insulating layer 13 is not less than 0.1 µm.

### [Electrode spacing S in a case where FFS driving was used]

Fig. 35 shows a relationship between the electrical energy EL and the electrode spacing S of the comb electrodes 14A and 14B in each of the Examples 2, 3, 5, 7, 17, 18, and 19 and the Comparative Examples 7 in which FFS driving was used.

As shown in Fig. 35, in a case where FFS driving is used and where the thickness d of the insulating layer 13 is 0.1 µm, the electrical energy EL becomes smaller as the electrode spacing S becomes smaller.

Meanwhile, in a case where the thickness d of the insulating layer 13 is 0.3 µm, the electrical energy EL becomes smaller as the electrode spacing S becomes smaller under the condition that the electrode spacing S is not more than 12.0 µm, whereas the electrical energy EL becomes larger as the electrode spacing S becomes smaller under the condition that the electrode spacing S is not less than 12.0 µm.

The result shown in Fig. 35 reveals that in a case where an inorganic insulating layer 13 which has a thickness d of 0.1 µm and has a high relative permittivity ε of 6.9 for example is used, it is preferable that the electrode spacing S is not less than 4.5 µm which allows the electrical energy EL to be not less than 0.44J/m³.

Further, the result shown in Fig. 35 reveals that in a case where an inorganic insulating layer 13 which has a thickness d of 0.3 µm and has a high relative permittivity ε of 6.9 for example is used, it is preferable that the electrode spacing S is in a range from not less than 6.0 µm to not more than 17.5 µm which allows the electrical energy EL to be not less than 0.44J/m³.

### [Electrode spacing S in a case where comb driving was used]

Fig. 36 shows a relationship between the electrical energy EL and the electrode spacing S of the comb electrodes 14A and 14B in each of the Examples 1, 4, 11, and 16 in which comb driving was used.

As described above, in a case where comb driving is used, the electrical energy EL becomes larger as the electrode spacing S becomes smaller, regardless of the thickness d of the insulating layer 13. Fig. 36 shows a relationship between the electrical energy EL and the electrode spacing S which relationship is obtained in a case where an inorganic insulating layer 13 which has a thickness d of 0.1µm and has a relative permittivity ε of 6.9 is used.

The result shown in Fig. 36 reveals that in a case where an inorganic insulating layer 13 which has a thickness d of 0.1 µm and has a high relative permittivity ε of 6.9 for example is used, it is preferable that the electrode spacing S of the comb electrodes 14A and 14B is not more than 14.5 µm which allows the electrical energy EL to be not less than 0.44J/m³.

### [Aperture ratio]

The transmittance in each the Examples and the Comparative Examples shown in Tables 1 through 5 is transmittance within an infinite plane. In actual manufacturing of the liquid crystal panel 2 (liquid crystal display element), a pixel size makes a difference.

Specifically, assuming that a pixel has a size of approximately 100×300µm, the number of dark lines is determined depending on the electrode spacing S. The number of dark lines increases as the electrode spacing S becomes smaller.

Here, a substantial transmission part (part except for the dark lines) becomes an aperture. The transmission part becomes larger as an area of the aperture becomes larger. Accordingly, the electrode spacing S is limited.

Table 10 shows results obtained by calculating, as an aperture ratio, a space part of each pixel (part except for the comb electrodes 14A and 14B) along with the electrode spacing S, the electrode width L, and the number of the comb electrodes 14A and 14B (number of lines), which space part was calculated on the assumption that each pixel has a width of 100 µm (width in a direction vertical to the comb electrodes 14A and 14B). Fig. 37 shows a relationship between the electrode spacing S and the aperture ratio which relationship is obtained in this case. Note that the aperture ratio is calculated based on the electrode spacing S, the electrode width L, and the number of lines, as described above. Accordingly, whether comb driving is carried out or FFS driving is carried out makes no difference.

The result shown in Fig. 37 reveals that the aperture ratio rapidly declines as the electrode spacing S goes below 4µm. Accordingly, it is preferable, from the viewpoint of the aperture ratio, that the electrode spacing S is not less than 4 µm, and the result shown in Fig. 37 and Table 10 shows that it is more preferable that the electrode spacing S is not less than 6 µm, regardless of whether comb driving is carried out or FFS driving is carried out.

**Table 10**

| Electrode spacing S | Electrode width L | Number of lines | Aperture ratio |
|---|---|---|---|
| 2µm | 2.6µm | 22 | 43% |
| 4µm | 2.6µm | 15 | 61% |
| 6µm | 2.6µm | 12 | 70% |
| 8µm | 2.6µm | 9 | 75% |
| 10µm | 2.6µm | 8 | 79% |
| 12µm | 2.6µm | 7 | 82% |
| 14µm | 2.6µm | 6 | 84% |
| 16µm | 2.6µm | 5 | 86% |

### [Substantial transmittance]

A substantial transmittance of a liquid crystal display device using a liquid crystal panel such as a TFT panel can be calculated by multiplying (i) the aperture ratio, (ii) transmittance within an infinite plane according to the present invention, and (iii) transmittance of a color filter (approximately 28%).

Table 11 shows substantial transmittance obtained in a case where the driving methods were employed, along with an electrode spacing S between adjacent comb electrodes 14A and 14B, transmittance within an infinite plane obtained when a voltage of 6V is applied, and an aperture ratio.

**Table 11**

| | Examples | Electrode spacing S | 6V transmittance | Aperture ratio | Substantial transmittance |
|---|---|---|---|---|---|
| | Example 20 | 2µm | 14.0% | 43% | 1.7% |
| | Example 11 | 4µm | 23.2% | 61% | 3.9% |
| Comb driving | Example 4 | 6µm | 16.7% | 70% | 3.3% |
| | Example 1 | 8µm | 16.2% | 75% | 3.4% |
| | Example 16 | 12µm | 14.1% | 82% | 3.2% |
| | Example 7 | 6µm | 13.3% | 70% | 2.6% |
| | Example 3 | 8µm | 18.6% | 75% | 3.9% |
| FFS driving | Example 17 | 12µm | 16.9% | 82% | 3.9% |
| | Example 18 | 14µm | 16.8% | 84% | 4.0% |
| | Example 19 | 16µm | 16.1% | 86% | 3.9% |

Fig. 38 shows relationships in the respective driving methods between substantial transmittance and an electrode spacing S.

As shown in Fig. 38, in a case where comb driving is carried out, substantial transmittance rapidly declines as the electrode spacing S exceeds 12.0µm. As such, in a case where comb driving is carried out, it is preferable, from the viewpoint of substantial transmittance, that the electrode spacing S is not more than 12.0µm. Further, as shown in Fig. 38, in a case where comb driving is carried out, substantial transmittance rapidly declines as the electrode spacing S goes below 4 µm. As such, in a case where comb driving is carried out, it is preferable, not only from the viewpoint of an aperture ratio (see Figs. 37 and Table 10), but also from the viewpoint of substantial transmittance, that the electrode spacing S is not less than 4 µm.

Further, Fig. 38 shows that in a case where FFS driving is carried out and where the thickness d of the insulating layer 13 is 0.3 µm, also from the viewpoint of substantial transmittance, the electrode spacing S is preferably not less than 6 µm, and more preferably not less than 8 µm, as in the relationship between the electrical energy EL and the electrode spacing S shown in Fig. 35. Fig. 38 also shows that the substantial transmittance starts to decline as the electrode spacing S becomes 12.0 µm or larger.

The above results reveal that evaluation using the electrical energy EL is useful as an easy evaluation method for obtaining a liquid crystal panel 2 and a liquid crystal display device 1 in which a driving voltage is low and transmittance is high.

It is therefore possible to manufacture a liquid crystal panel 2 and a liquid crystal display device 1 in which a driving voltage is low and transmittance is high in a case where on one of substrates 10 and 20 which sandwich a liquid crystal layer 30 and face each other, an upper electrode constituted by comb electrodes 14A and 14B and a lower electrode 12 are formed so as to overlap each other via an insulating layer 13, and a combination of an electrode spacing S of the comb electrodes 14A and 14B, a thickness of the insulating layer 13, a relative permittivity ε of the insulating layer 13, and a driving method is determined so that an electrical energy EL is not less than 0.44J/m³.

The above results reveal that in a case where comb driving is carried out, an electrical energy EL of not less than 0.44J/m³ and high transmittance can be obtained under the conditions that (i) the insulating layer 13 has a relative permittivity of 3.3, (ii) the electrode spacing S between the adjacent comb electrodes 14A and 14B is not more than 12.0 µm, and (iii) the insulating layer 13 has a thickness d of 2.8 µm. According to the arrangement, it is therefore possible to manufacture a liquid crystal panel 2 and a liquid crystal display device 1 in which a driving voltage is low and transmittance is high.

Further, in a case where comb driving is carried out, an electrical energy EL of not less than 0.44J/m³ and high transmittance can be obtained also under the conditions that (i) the insulating layer 13 has a relative permittivity in a range from 3.3 to 6.9, (ii) the electrode spacing S between the adjacent comb electrodes 14A and 14B is not more than 12.0 µm, and (iii) the insulating layer 13 has a thickness d of not more than 1.8 µm. Also in this case, it is therefore possible to manufacture a liquid crystal panel 2 and a liquid crystal display device 1 in which a driving voltage is low and transmittance is high.

Note that, for the above-mentioned reason, it is preferable that the thickness d of the insulating layer 13 is not less than 0.1 µm.

Meanwhile, in a case where FFS driving is carried out, in order to obtain an electrical energy EL of not less than 0.44J/m³, it is preferable that the thickness d of the insulating layer 13 is not more than 0.65 µm, under the conditions that the relative permittivity of the insulating layer 13 is 6.9 and the electrode spacing S between the adjacent comb electrodes 14A and 14B is 8.0 µm. Further, it is preferable that the thickness d of the insulating layer 13 is not more than 0.35 µm under the conditions that the relative permittivity of the insulating layer 13 is in a range from 3.3 to 6.9 and the electrode spacing S between the adjacent comb electrodes 14A and 14B is 8.0 µm.

Note that, for the above-mentioned reason, it is preferable, also in these cases, that the thickness d of the insulating layer 13 is not less than 0.1 µm.

Further, in a case where FFS driving is carried out, it is preferable that the electrode spacing S between the adjacent comb electrodes 14A and 14B is not less than 4.5 µm under the conditions that the relative permittivity of the insulating layer 13 is 6.9 and the thickness of the insulating layer 13 is 0.1 µm. In this case, an electrical energy EL of not less than 0.44J/m³ and high substantial transmittance can be obtained, as described above. Note that, in this case, the larger the electrode spacing S is, the better it is. That is, an upper limit of the electrode spacing S is not limited in particular. Note that the upper limit of the electrode spacing S is automatically determined based on a pixel area, as long as the number of comb electrodes 14A and 14B (the number of lines) and the electrode width L are determined.

Further, in a case where FFS driving is carried out, an electrical energy EL of not less than 0.44J/m³ and high transmittance can be obtained as described above also under the conditions that (i) the insulating layer 13 has a relative permittivity of 6.9, (ii) the insulating layer 13 has a thickness in a range from 0.1 µm to 0.3 µm, and (iii) the electrode spacing S between the adjacent comb electrodes 14A and 14B is not less than 6.0 µm.

Further, in a case where FFS driving is carried out and where the electrode spacing S is 8.0 µm, an electrical energy EL of not less than 0.60J/m³ can be obtained regardless of the relative permittivity ε as long as the thickness d of the insulating layer 13 is 0.1 µm.

As thus far described, the present invention is an extremely revolutionary invention which can realize both of reduction in voltage and improvement in transmittance in a display mode in which a lateral electric field is applied in a vertical alignment cell, which realization has been considered difficult.

Note that, according to the present invention, a material (relative permittivity ε) and a thickness d of the insulating layer 13 and the electrode width L/electrode spacing S are not limited in particular, provided that they are set/selected so that an electrical energy EL satisfies the above range.

Further, materials and formation methods for other constituents can be selected/set as has been conventionally done, and need not to be changed.

The above Examples have dealt with an example in which ITO was used as the comb electrodes 14A and 14B. However, it is needless to say that IZO (Indium Zinc Oxide) can be used instead of ITO. Similarly, a material and thickness of each constituent is not limited in particular.

These conditions can be appropriately selected and changed by a person skilled in the art. It is only necessary that at least one parameter selected from a group of a material (relative permittivity ε) and a thickness d of the insulating layer 13 and the electrode width L/electrode spacing S is set in accordance with a formation condition of each used constituent so that an electrical energy EL satisfies the above range.

Note that in a case where an acrylic resin having a thickness in a range from 1 µm to 3 µm is used as an organic insulating layer 13, a black matrix 13A and a color filter 13B may be formed as the insulating layer 13 as shown in Fig. 39 instead of forming a color filter layer on the substrate 20. That is, a color filter can be used instead of the insulating layer 13so as to function as an insulating layer. In other words, the insulating layer 13 may include a color filter layer.

Fig. 39 is a cross-sectional view of a liquid crystal panel 2 in which an insulating layer constituted by the black matrix 13A and the color filter 13B is used as the insulating layer 13 as described above, which cross-sectional view is taken when no voltage is applied.

As described above, a liquid crystal panel of the present invention includes: a pair of substrates which face each other; a liquid crystal layer sandwiched by the pair of substrates; and an upper electrode and a lower electrode which are provided on one of the pair of substrates and overlap each other via an insulating layer, the upper electrode being constituted by comb electrodes, an average electrical energy being not less than 0.44J/m³ in a part of the liquid crystal layer which part is 0.1 µm deep from a surface of the other one of the pair of substrates and which part overlaps the comb electrodes when the liquid crystal layer is viewed from a direction vertical to a substrate surface. Further, a liquid crystal display device of the present invention includes the liquid crystal panel.

The liquid crystal panel may be arranged such that (i) the upper electrode is constituted by a first and second comb electrodes, and the liquid crystal layer is driven with use of an electric field generated between the first and second comb electrodes which are adjacent or may be arranged such that (ii) the liquid crystal layer is driven with use of an electric field generated between the upper electrode and the lower electrode.

Here, it is preferable that a relative permittivity of the insulating layer is 3.3, a spacing between the first and second comb electrodes is not more than 12.0 µm, and a thickness of the insulating layer is in a range from not less than 0.1 µm to not more than 2.8 µm or it is preferable that a relative permittivity of the insulating layer is in a range from 3.3 to 6.9, a spacing between the first and second comb electrodes is not more than 12.0 µm, and a thickness of the insulating layer is in a range from not less than 0.1 µm to not more than 1.8 µm.

Further, it is preferable, for the above-mentioned reason, that the spacing between the first and second comb electrodes is not less than 4 µm.

Meanwhile, in a case where (ii) the liquid crystal layer is driven with use of an electric field generated between the upper electrode and the lower electrode, it is preferable that the electrical energy is not less than 0.60J/m³.

Further, in a case where (ii) the liquid crystal layer is driven with use of an electric field generated between the upper electrode and the lower electrode, in order that the electrode energy is 0.44J/m³, it is preferable that a relative permittivity of the insulating layer is 6.9, a spacing between any adjacent two of the comb electrodes in the upper electrode is 8.0 µm, and a thickness of the insulating layer is in a range from not less than 0.1 µm to not more than 0.65 µm. Alternatively, it is preferable that a relative permittivity of the insulating layer is in a range from 3.3 to 6.9, a spacing between any adjacent two of the comb electrodes in the upper electrode is 8.0 µm, and a thickness of the insulating layer is in a range from not less than 0.1 µm to not more than 0.35 µm. Alternatively, it is preferable that a relative permittivity of the insulating layer is 6.9, a thickness of the insulating layer is 0.1 µm, and a spacing between any adjacent two of the comb electrodes in the upper electrode is not less than 4.5 µm. Alternatively, it is preferable that a relative permittivity of the insulating layer is 6.9, a thickness of the insulating layer is in a range from 0.1 µm to 0.3 µm, and a spacing between any adjacent two of the comb electrodes in the upper electrode is in a range from not less than 6.0 µm to not more than 12.0 µm.

Further, the insulating layer may include a color filter layer. That is, in a case where an acrylic resin as an organic insulating layer is used as the insulating layer, a color filter layer can be used instead of the insulating layer so as to function as an insulating layer. This makes it possible (i) to form a color filter on the substrate on which the upper electrode and the lower electrode are provided and (ii) to reduce a thickness of the liquid crystal panel.

As described above, a method of the present invention for manufacturing a liquid crystal panel, includes: forming an upper electrode and a lower electrode on one of a pair of substrates which sandwich a liquid crystal layer and face each other, the upper electrode being constituted by comb electrodes and overlapping the lower electrode via an insulating layer; and determining a combination of an electrode spacing of the comb electrodes, a thickness of the insulating layer, a relative permittivity of the insulating layer, and a driving mode so that an average electrical energy becomes not less than 0.44J/m³ in a part of the liquid crystal layer which part is 0.1 µm deep from a surface of the other one of the pair of substrates and which part overlaps the comb electrodes when the liquid crystal layer is viewed from a direction vertical to a substrate surface.

According to the present invention, it is possible to provide (i) a liquid crystal panel, (ii) a method for manufacturing the liquid crystal panel, and (iii) a liquid crystal display device, each of which can achieve a high-speed response, a wide viewing angle characteristic, and a high contrast, can carry out driving with the use of a practical driving voltage, and has a high transmittance.

The present invention is not limited to the description of the embodiments above, but may be altered by a skilled person within the scope of the claims. An embodiment based on a proper combination of technical means disclosed in different embodiments is encompassed in the technical scope of the present invention.

### Industrial Applicability

A liquid crystal panel and a liquid crystal display device of the present invention do not require an initial bend transition operation, have high transmittance while attaining a practical driving voltage, and can simultaneously achieve characteristics of (i) a wide viewing angle equivalent to those of an MVA mode and an IPS mode, (ii) a high-speed response as fast as or faster than that of the OCB mode, and (iii) a high contrast. As such, the liquid crystal panel and the liquid crystal display device of the present invention can be suitably applied especially to a public bulletin board for an outdoor use, and mobile devices such as a mobile phone and a PDA.

### Reference Signs List

- 1:: Liquid crystal display device
- 2:: Liquid crystal panel
- 3:: Driving circuit
- 4:: Backlight
- 5:: Liquid crystal cell
- 10:: Substrate
- 11:: Glass substrate
- 12:: Lower electrode
- 13:: Insulating layer
- 13A:: Black matrix
- 13B:: Color filter
- 14:: Upper electrode
- 14A:: Comb electrode
- 14B:: Comb electrode
- 15:: Alignment film
- 20:: Substrate
- 21:: Glass substrate
- 22:: Alignment film
- 30:: Liquid crystal layer
- 31:: Liquid crystal molecule
- 33:: Spacer
- 34:: Sealing agent
- 35:: Polarizer
- 36:: Polarizer
- 37:: Phase plate
- 38:: Phase plate

## Claims

1. A liquid crystal panel comprising:
a pair of substrates which face each other;
a liquid crystal layer sandwiched by the pair of substrates; and
an upper electrode and a lower electrode which are provided on one of the pair of substrates and overlap each other via an insulating layer,
the upper electrode being constituted by comb electrodes,
an average electrical energy being not less than 0.44J/m³ in a part of the liquid crystal layer which part is 0.1 µm deep from a surface of the other one of the pair of substrates and which part overlaps the comb electrodes when the liquid crystal layer is viewed from a direction vertical to a substrate surface.

2. The liquid crystal panel according to claim 1, wherein:
the upper electrode is constituted by first and second comb electrodes, and the liquid crystal layer is driven with use of an electric field generated between the first and second comb electrodes which are adjacent to each other.

3. The liquid crystal panel according to claim 1 or 2, wherein:
a relative permittivity of the insulating layer is 3.3, a spacing between the first and second comb electrodes which are adjacent to each other is not more than 12.0 µm, and a thickness of the insulating layer is in a range from not less than 0.1 µm to not more than 2.8 µm.

4. The liquid crystal panel according to claim 1 or 2, wherein:
a relative permittivity of the insulating layer is in a range from 3.3 to 6.9, a spacing between the first and second comb electrodes which are adjacent to each other is not more than 12.0 µm, and a thickness of the insulating layer is in a range from not less than 0.1 µm to not more than 1.8 µm.

5. The liquid crystal panel according to claim 1, wherein:
the liquid crystal layer is driven with use of an electric field generated between the upper electrode and the lower electrode.

6. The liquid crystal panel according to claim 5, wherein:
the electrical energy is not less than 0.60J/m³.

7. The liquid crystal panel according to claim 5, wherein:
a relative permittivity of the insulating layer is 6.9, a spacing between any adjacent two of the comb electrodes in the upper electrode is 8.0 µm, and a thickness of the insulating layer is in a range from not less than 0.1 µm to not more than 0.65 µm.

8. The liquid crystal panel according to claim 5, wherein:
a relative permittivity of the insulating layer is in a range from 3.3 to 6.9, a spacing between any adjacent two of the comb electrodes in the upper electrode is 8.0 µm, and a thickness of the insulating layer is in a range from not less than 0.1 µm to not more than 0.35 µm.

9. The liquid crystal panel according to claim 5, wherein:
a relative permittivity of the insulating layer is 6.9, a thickness of the insulating layer is 0.1 µm, and a spacing between any adjacent two of the comb electrodes in the upper electrode is not less than 4.5 µm.

10. The liquid crystal panel according to claim 5, wherein:
a relative permittivity of the insulating layer is 6.9, a thickness of the insulating layer is in a range from 0.1 µm to 0.3 µm, and a spacing between any adjacent two of the comb electrodes in the upper electrode is in a range from not less than 6.0 µm to not more than 12.0 µm.

11. The liquid crystal panel according to claim 1 or 2, wherein:
the insulating layer includes a color filter layer.

12. A liquid crystal display device comprising a liquid crystal panel as set forth in any one of claims 1 through 11.

13. A method for manufacturing a liquid crystal panel, comprising:
forming an upper electrode and a lower electrode on one of a pair of substrates which sandwich a liquid crystal layer and face each other, the upper electrode being constituted by comb electrodes and overlapping the lower electrode via an insulating layer; and
determining a combination of an electrode spacing of the comb electrodes, a thickness of the insulating layer, a relative permittivity of the insulating layer, and a driving mode so that an average electrical energy becomes not less than 0.44J/m³ in a part of the liquid crystal layer which part is 0.1 µm deep from a surface of the other one of the pair of substrates and which part overlaps the comb electrodes when the liquid crystal layer is viewed from a direction vertical to a substrate surface.
